# EUROPEAN PATENT APPLICATION

(11) **EP 4 668 422 A1**
(43) Date of publication of application: **24.12.2025**
(21) Application number: 24833796.6
(22) Date of filing: 12.08.2024
(51) Int. Cl.: H01M 50/107, H01M 10/0525, H01M 10/0567, H01M 10/0569, H01M 10/0587, H01M 50/152, H01M 50/167, H01M 50/342, H01M 10/0568, H01M 50/124

(54) **BATTERY CELL, BATTERY AND ELECTRIC DEVICE**

(30) Priority: 30.04.2024 CN 202410543471
(71) Applicant: Contemporary Amperex Technology (Hong Kong) Limited, Hong Kong (HK)
(72) Inventor: XU, Ningbo, Ningde Fujian 352100 (CN); CHEN, Peipei, Ningde Fujian 352100 (CN)
(74) Representative: Lorenz Seidler Gossel Part. mbB
(86) International application number: PCT/CN2024/111484
(87) International publication number: WO 2025/227551

(57) **Abstract**

This application is related to a battery cell (7), a battery (2), and an electric apparatus. The battery cell (7) includes an electrolyte, an electrode assembly (10), and a shell (20). The electrode assembly (10) and the electrolyte are accommodated in the shell (20), where the shell (20) is a cylindrical structure. The electrolyte includes a linear ester solvent, and a mass percentage of the linear ester solvent in the electrolyte is greater than or equal to 25.5 wt%. The rate performance and reliability of use of the battery cell (7) in embodiments of this application can be improved.

## Description

### CROSS-REFERENCE TO RELATED APPLICATIONS

This application claims priority to Chinese Patent Application No. 202410543471.0, filed on April 30, 2024 and entitled "BATTERY CELL, BATTERY, AND ELECTRIC APPARATUS", which is incorporated herein by reference in its entirety.

### TECHNICAL FIELD

This application relates to the field of rechargeable batteries, and in particular, to a battery cell, a battery, and an electric apparatus.

### BACKGROUND

Battery cells have characteristics such as high capacity, and thus are widely used in electronic devices such as mobile phones, laptop computers, electric bicycles, electric vehicles, electric aircrafts, electric ships, electric toy cars, electric toy ships, electric toy aircrafts, and electric tools.

With the development of the battery cell field, the requirements for battery performance are gradually increasing, and the rate performance and reliability of use of battery cells need to be further enhanced.

### SUMMARY

This application provides a battery cell, a battery, and an electric apparatus. The rate performance and reliability of use of the battery cell in embodiments of this application can be improved.

According to a first aspect, an embodiment of this application proposes a battery cell. The battery cell includes an electrolyte, an electrode assembly, and a shell. The electrode assembly and the electrolyte are accommodated in the shell, where the shell is a cylindrical structure. The electrolyte includes a linear ester solvent, and a mass percentage of the linear ester solvent in the electrolyte is greater than or equal to 25.5 wt%.

Therefore, the mass percentage of the linear ester solvent in the electrolyte is greater than or equal to 25.5 wt% in this embodiment of this application, so that the conductivity of the electrolyte is relatively high, which is conducive to enhancing the liquid phase transport capacity of active ions and enhancing the fast charging and discharging capabilities of the battery cell, thereby improving the rate performance of the battery cell. With this type of solvent, the problem of decomposition and gas production may occur during the charge and discharge cycle of the battery cell. However, the cylindrical structure of the shell of the battery cell enables even distribution of pressure inside the battery cell so that the shell is evenly stressed everywhere, which effectively increases the pressure resistance of the shell, thereby enhancing the reliability of use of the battery cell. The extrusion and reflux of the electrolyte occur in the electrode assembly during the charge and discharge cycle. Due to the cylindrical structure of the shell, the axial dimension of the battery cell may be much greater than its radial dimension, resulting in a longer reflux path for the electrolyte along the axial direction, so that it is difficult to fully infiltrate the electrode assembly. In this embodiment of this application, the electrolyte uses a linear ester solvent, and the mass percentage of the linear ester solvent is greater than or equal to 25.5 wt%, enabling the electrolyte system to have relatively low viscosity and to flow more easily and infiltrate the electrode assembly. This can improve the fast charging and discharging capabilities of the battery cell, thereby improving the rate performance of the battery cell. Therefore, the combined use of the specific electrolyte system and the cylindrical shell in this embodiment of this application can improve both the rate performance and the reliability of use of the battery cell.

In some embodiments, the mass percentage of the linear ester solvent in the electrolyte is 25.5 wt% to 76.5 wt%. With the mass percentage of the linear ester solvent falling within the foregoing range, the rate performance and reliability of use of the battery cell can be further improved, and the cycling performance of the battery cell can also be further improved.

In some embodiments, the mass percentage of the linear ester solvent in the electrolyte is 25.5 wt% to 70 wt%. With the mass percentage of the linear ester solvent falling within the foregoing range, the rate performance and reliability of use of the battery cell can be further improved, and the cycling performance of the battery cell can also be further improved.

In some embodiments, the mass percentage of the linear ester solvent in the electrolyte is 42.5 wt% to 70 wt%. With the mass percentage of the linear ester solvent falling within the foregoing range, the rate performance and reliability of use of the battery cell can be further improved, and the cycling performance of the battery cell can also be further improved.

In some embodiments, the linear ester solvent includes a linear carbonate, and a mass percentage of the linear carbonate in the electrolyte is 4 wt% to 70 wt%. With the mass percentage of the linear carbonate falling within the foregoing range, the conductivity of the electrolyte can be improved, enhancing the liquid phase transport kinetic performance of the electrolyte and further improving the rate performance and reliability of use of the battery cell.

In some embodiments, the mass percentage of the linear carbonate in the electrolyte is 4 wt% to 42.5 wt%. With the mass percentage of the linear carbonate falling within the foregoing range, the conductivity of the electrolyte can be improved, enhancing the liquid phase transport kinetic performance of the electrolyte and further improving the rate performance and reliability of use of the battery cell.

In some embodiments, the linear carbonate includes a compound represented by formula I, 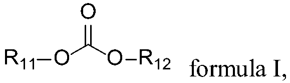 where
in formula I, R₁₁ and R₁₂ each independently include a C1 to C3 alkyl group or a C1 to C3 haloalkyl group.

Therefore, when the linear carbonate is made of the foregoing materials in the embodiments of this application, the rate performance and reliability of use of the battery cell can be further improved.

In some embodiments, R₁₁ and R₁₂ each independently include a C1 to C3 alkyl group or a C1 to C3 fluoroalkyl group.

In some embodiments, the linear carbonate includes one or more of compounds represented by formula I-1 to formula I-6,

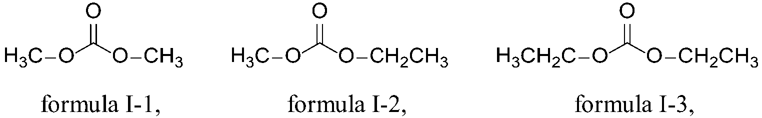

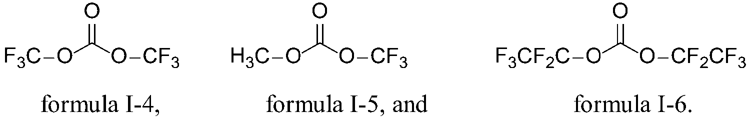

In some embodiments, the linear carbonate includes a compound represented by formula I-1,

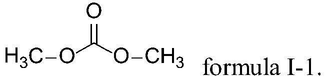

In some embodiments, the linear ester solvent includes a linear carboxylate, and a mass percentage of the linear carboxylate in the electrolyte is 4 wt% to 70 wt%. The combined use of the linear carboxylate and the linear carbonate can improve the conductivity of the electrolyte, enhance the liquid phase transport kinetic of the electrolyte, and further improve the rate performance and reliability of use of the battery cell.

In some embodiments, the mass percentage of the linear carboxylate in the electrolyte is 8.5 wt% to 60 wt%. With the mass percentage of the linear carboxylate in the electrolyte falling within the foregoing range, the conductivity of the electrolyte can be improved, enhancing the liquid phase transport kinetic of the electrolyte and further improving the rate performance and reliability of use of the battery cell.

In some embodiments, the linear carboxylate includes a compound represented by formula II, 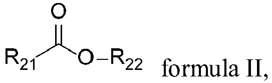 where
in formula II,
R₂₁ includes a hydrogen atom, a halogen atom, a C1 to C3 alkyl group, or a C1 to C3 haloalkyl group; and
R₂₂ includes a C1 to C3 alkyl group or a C1 to C3 haloalkyl group.

Therefore, the combined use of the linear carboxylate and linear carbonate with the foregoing materials in the embodiments of this application can further improve the rate performance and reliability of use of the battery cell.

In some embodiments, R₂₁ includes a hydrogen atom, a fluorine atom, a C1 to C3 alkyl group, or a C1 to C3 fluoroalkyl group.

In some embodiments, R₂₂ includes a C1 to C3 alkyl group or a C1 to C3 fluoroalkyl group.

In some embodiments, the linear carboxylate includes one or more of compounds represented by formula II-1 to formula II-6,

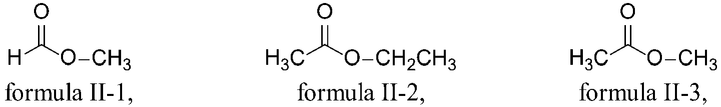

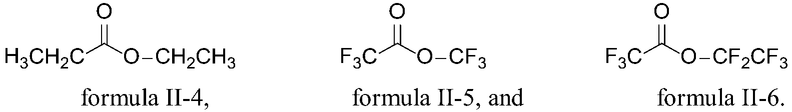

In some embodiments, the linear carboxylate includes one or more of compounds represented by formula II-2 and formula II-3.

In some embodiments, the linear carbonate includes a compound represented by formula I-1, 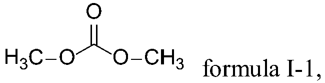 where
a mass percentage of the compound represented by formula I-1 in the electrolyte is 8.5 wt% to 35 wt%; and
the linear carboxylate includes a compound represented by formula II-2 and a compound represented by formula II-3, and a mass percentage of the compound represented by formula II-2 and compound represented by formula II-3 in the electrolyte is 20 wt% to 55 wt%.

In some embodiments, the shell includes a housing and an end cover, the housing includes a side wall and an end wall connected to the side wall, the housing has an opening, the end cover is connected to the side wall and covers the opening, and the end cover and the end wall are opposite to each other along axial direction of the shell.

In some embodiments, a matrix material of the side wall is steel, and a thickness of the side wall is 0.30 mm to 1.2 mm. With the thickness of the side wall falling within the foregoing range, the side wall has higher strength and a stronger ability to withstand pressure, which can effectively alleviate the risk of deformation of the side wall and reduce the risk of swelling of the battery cell, thereby enhancing the reliability of use of the battery cell.

In some embodiments, the thickness of the side wall is 0.30 mm to 0.55 mm. With the thickness of the side wall falling within the foregoing range, the risk of swelling of the battery cell can be reduced, thereby enhancing the reliability of use of the battery cell.

In some embodiments, the side wall and the end wall are integrally formed.

In some embodiments, the end cover is provided with a pressure relief mechanism. The pressure relief mechanism deforms under the action of internal pressure, so that the internal space of the shell communicates with the external space, and gases inside the shell can be discharged, thereby reducing the risk of explosion of the battery cell.

In some embodiments, the pressure relief mechanism includes a weak portion, a matrix material of the weak portion includes steel, and a thickness of the weak portion is 0.01 mm to 0.3 mm. With the thickness of the weak portion wall falling within the foregoing range, the weak portion has higher strength and a stronger ability to withstand pressure, which can effectively enhance the pressure resistance of the battery cell, enhancing the reliability of use of the battery cell.

In some embodiments, the thickness of the weak portion is 0.05 mm to 0.2 mm. With the thickness of the weak portion falling within the foregoing range, the reliability of use of the battery cell can be further enhanced.

In some embodiments, the end cover is provided with a recess, and a bottom wall of the recess is the weak portion. Such a structure is simple and convenient for processing.

In some embodiments, the battery cell further includes an electrode terminal disposed on the end wall. The battery cell includes an electrode assembly accommodated in the housing. The electrode assembly includes a first tab and a second tab that have opposite polarities, the first tab is electrically connected to the end wall, and the second tab is electrically connected to the electrode terminal.

In some embodiments, a dimension of the shell along its axial direction is 1.3 times to 2.5 times a dimension of the shell along its radial direction.

In some embodiments, the dimension of the shell along its axial direction is 50 mm to 150 mm.

In some embodiments, the dimension of the shell along its radial direction is 40 mm to 80 mm.

In some embodiments, the electrolyte includes an electrolytic salt. The electrolytic salt includes a hexafluorophosphate and a sulfonylimide, and a molar concentration of the hexafluorophosphate is less than or equal to 0.9 mol/L. With the molar concentration of the hexafluorophosphate falling within the foregoing range, the corrosion on the shell can be further reduced, and the reliability of use and cycling performance of the battery cell can be enhanced.

In some embodiments, the molar concentration of the hexafluorophosphate is 0.2 mol/L to 0.8 mol/L. With the molar concentration of the hexafluorophosphate falling within the foregoing range, the reliability of use and cycling performance of the battery cell can be further enhanced.

In some embodiments, the molar concentration of the hexafluorophosphate is 0.3 mol/L to 0.7 mol/L. With the molar concentration of the hexafluorophosphate falling within the foregoing range, the reliability of use and cycling performance of the battery cell can be further enhanced.

In some embodiments, a ratio of a molar concentration of the sulfonylimide to the molar concentration of the hexafluorophosphate is 0.06 to 6. With the ratio of the molar concentration of the sulfonylimide to the molar concentration of the hexafluorophosphate falling within the foregoing range, the electrolytic salt has excellent thermal stability and is not prone to thermal decomposition that would lead to acid corrosion. Moreover, the electrolytic salt has excellent electrochemical stability, which can further enhance the stability of the electrolytic salt, enhancing the reliability of use and cycling performance of the battery cell.

In some embodiments, a ratio of the molar concentration of the sulfonylimide to the molar concentration of the hexafluorophosphate is 0.2 to 2. With the ratio of the molar concentration of the sulfonylimide to the molar concentration of the hexafluorophosphate falling within the foregoing range, the stability of the electrolytic salt can be further enhanced, enhancing the reliability of use and cycling performance of the battery cell.

In some embodiments, a ratio of the molar concentration of the sulfonylimide to the molar concentration of the hexafluorophosphate is 0.3 to 1.5. With the ratio of the molar concentration of the sulfonylimide to the molar concentration of the hexafluorophosphate falling within the foregoing range, the stability of the electrolytic salt can be further enhanced, enhancing the reliability of use and cycling performance of the battery cell.

In some embodiments, a molar concentration of the electrolytic salt is 0.5 mol/L to 2 mol/L. With the molar concentration of the electrolytic salt falling within the foregoing range, it is conducive to further enhancing the stability of the electrolytic salt, enhancing the reliability of use and cycling performance of the battery cell; and it is also conducive to enhancing the liquid phase transport capacity of active ions, thereby improving the kinetic performance of the battery cell.

In some embodiments, a molar concentration of the electrolytic salt is 0.6 mol/L to 1.5 mol/L. With the molar concentration of the electrolytic salt falling within the foregoing range, it is conducive to further improving the kinetic performance of the battery cell.

In some embodiments, the sulfonylimide includes an anion represented by formula A, 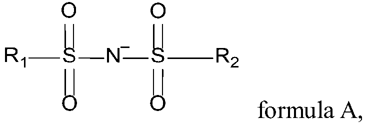 where
in formula A, R₁ and R₂ each independently include a halogen atom or a C1 to C6 haloalkyl group.

Therefore, the sulfonylimide with the foregoing materials in the embodiments of this application has excellent thermal stability, which is conducive to reducing the corrosion of the electrolytic salt on the shell, enhancing the reliability of use and cycling performance of the battery cell.

In some embodiments, the halogen atom includes a fluorine atom.

In some embodiments, the C1 to C6 haloalkyl group includes a C1 to C6 fluoroalkyl group.

In some embodiments, R₁ and R₂ each independently include a fluorine atom or a C1 to C3 fluoroalkyl group.

In some embodiments, the anion represented by formula A includes one or more of anions represented by formula A-1 to formula A-5,

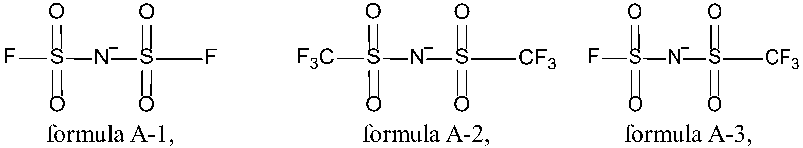

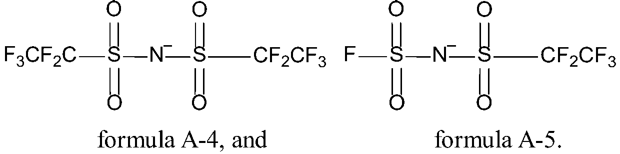

In some embodiments, the anion represented by formula A includes one or more of anions represented by formula A-1 and formula A-2,

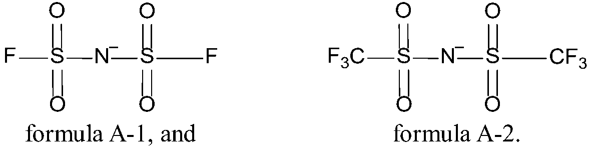

In some embodiments, the shell includes a shell body and a film layer, where the film layer is disposed on at least a surface of the shell body facing the electrolyte, and a matrix element of the film layer is element nickel. The film layer is conducive to enhancing the acid corrosion resistance of the shell, thereby enhancing the reliability of use and cycling performance of the battery cell.

In some embodiments, a thickness of the film layer is 1.5 µm to 6.0 µm. With the thickness of the film layer falling within the foregoing range, it is conducive to enhancing the acid corrosion resistance of the film layer, thereby enhancing the reliability of use and cycling performance of the battery cell.

In some embodiments, the thickness of the film layer is 2.0 µm to 4.0 µm. With the thickness of the film layer falling within the foregoing range, it is conducive to enhancing the acid corrosion resistance of the film layer, thereby enhancing the reliability of use and cycling performance of the battery cell.

In some embodiments, a mass percentage of element nickel in the film layer is 70 wt% to 100 wt%. With the mass percentage of element nickel falling within the foregoing range, the acid corrosion resistance of the film layer is enhanced, so that the reliability of use and cycling performance of the battery cell can be enhanced.

In some embodiments, the mass percentage of element nickel in the film layer is 80 wt% to 95 wt%. With the mass percentage of element nickel falling within the foregoing range, the acid corrosion resistance of the film layer is enhanced, so that the reliability of use and cycling performance of the battery cell can be enhanced.

In some embodiments, the film layer further includes element iron, and a mass percentage of element iron in the film layer is 0.1 wt% to 10 wt%, optionally 1 wt% to 5 wt%. With the mass percentage of element iron falling within the foregoing range, the conductivity of the shell can be effectively improved, which is conducive to electron transport.

In some embodiments, the film layer further includes element carbon, and a mass percentage of element carbon in the film layer is 0.1 wt% to 15 wt%, optionally 4 wt% to 12 wt%. With the mass percentage of element carbon falling within the foregoing range, the conductivity of the shell can be effectively improved, which is conducive to electron transport.

In some embodiments, a matrix material of the shell body is steel. The shell body made of the foregoing material has excellent mechanical strength and is not prone to deformation, which can further improve the reliability of use of the battery cell.

According to a second aspect, an embodiment of this application further provides a battery, the battery including the battery cell according to any one of the embodiments of the first aspect of this application.

According to a third aspect, an embodiment of this application provides an electric apparatus, including the battery according to any one of the embodiments of the second aspect of this application.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and a person of ordinary skill in the art may still derive other drawings from the accompanying drawings without creative efforts.
FIG. 1 is a schematic structural diagram of a vehicle according to some embodiments of this application;
FIG. 2 is a schematic exploded view of a battery according to some embodiments of this application;
FIG. 3 is a schematic exploded view of a battery module shown in FIG. 2.
FIG. 4 is a schematic structural diagram of a battery cell according to some embodiments of this application;
FIG. 5 is a schematic exploded view of a battery cell according to some embodiments of this application;
FIG. 6 is a schematic cross-sectional diagram of a battery cell according to some embodiments of this application; and
FIG. 7 is an enlarged schematic diagram of the battery cell at position A shown in FIG. 6.

The figures are not necessarily drawn to scale.

Reference signs:
X. axial direction; Y. radial direction;
1. vehicle; 2. battery; 3. controller; 4. motor; 5. box; 5a. first box portion; 5b. second box portion; 5c. accommodating space; 6. battery module; 7. battery cell;
10. electrode assembly; 111. first tab; 112. second tab; 12. main body;
20. shell; 21. housing; 211. end wall; 212. side wall;
22. end cover; 220. pressure relief mechanism; 221. recess; 222. weak portion;
30. electrode terminal; and
40. current collecting member.

### DESCRIPTION OF EMBODIMENTS

The following specifically discloses embodiments of a battery cell, a battery, and an electric apparatus of this application with appropriate reference to detailed descriptions of the accompanying drawings. However, there may be cases in which unnecessary detailed descriptions are omitted. For example, detailed descriptions of well-known matters and repeated descriptions of actually identical structures have been omitted. This is to avoid unnecessarily prolonging the following descriptions, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that special range. Ranges defined in this way may or may not include end values, and any combination may be used, meaning that any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise stated, all the embodiments and optional embodiments of this application can be combined with each other to form new technical solutions.

Unless otherwise stated, all the technical features and optional technical features of this application can be combined with each other to form new technical solutions.

Unless otherwise stated, all the steps in this application can be performed in the order described or in random order, preferably, in the order described. For example, a method including steps (a) and (b) indicates that the method may include steps (a) and (b) performed in order or may include steps (b) and (a) performed in order. For example, the method may further include step (c), indicating that step (c) may be added to the method in any order. For example, the method may include steps (a), (b), and (c), or steps (a), (c), and (b), or steps (c), (a), and (b), or the like.

Reference to "embodiment" in this application means that specific features, structures, or characteristics described with reference to the embodiment may be included in at least one embodiment of this application. The word "embodiment" appearing in various places in this specification does not necessarily refer to the same embodiment or an independent or alternative embodiment that is exclusive of other embodiments.

In the description of this application, it should be noted that unless otherwise stated and defined explicitly, the terms "mounting", "connection", "joining", and "attachment" should be understood in their general senses. For example, they may refer to a fixed connection, a detachable connection, or an integral connection, and may refer to a direct connection, an indirect connection via an intermediate medium, or an internal communication between two elements. Persons of ordinary skill in the art can understand specific meanings of these terms in this application as appropriate to specific situations.

The term "and/or" in this application is only an associative relationship for describing associated objects, indicating that three relationships may be present. For example, A and/or B may indicate the following three cases: presence of only A; presence of both A and B; and presence of only B. In addition, the character "/" in this application generally indicates an "or" relationship between the contextually associated objects.

In the embodiments of this application, the same reference signs denote the same components. For brevity, in different embodiments, detailed descriptions of the same components are not repeated. It should be understood that, as shown in the accompanying drawings, sizes such as thickness, length, and width of various members and sizes such as thickness, length, and width of integrated devices in the embodiments of this application are merely for illustrative purposes and should not constitute any limitations on this application.

In this application, "a plurality of" means more than two (inclusive). In the embodiments of this application, the battery cell may be a secondary battery, and the secondary battery refers to a battery cell that can be recharged to activate active materials for continuous use after the battery cell is discharged.

The battery cells may include but are not limited to lithium-ion battery cells, sodium-ion battery cells, sodium-lithium-ion batteries cell, lithium metal battery cells, sodium metal battery cells, lithium-sulfur battery cells, magnesium-ion battery cells, nickel-metal hydride battery cells, nickel-cadmium battery cells, lead-acid battery cells, and the like.

In an example, the battery cell may be a cylindrical battery cell. The cylindrical battery cell refers to a battery cell that presents a cylindrical structure or a structure similar to a cylindrical shape.

The battery mentioned in the embodiments of this application is a single physical module that includes one or more battery cells for providing higher voltage and capacity.

In some embodiments, the battery can be a battery module, and when there are a plurality of battery cells, the plurality of battery cells are arranged and fastened to form a battery module.

In some embodiments, the battery may be a battery pack, the battery pack includes a box and battery cells, and the battery cells or battery modules are accommodated in the box.

In some embodiments, the box may be used as part of the chassis structure of a vehicle. For example, part of the box may become at least part of the chassis of a vehicle, or part of the box may become at least parts of a cross beam and longitudinal beam of a vehicle.

In some embodiments, the battery may be an energy storage apparatus. The energy storage apparatus includes an energy storage container, an energy storage electric cabinet, and the like.

The battery cell includes an the electrode assembly, an electrolyte, and a shell. The electrode assembly includes an electrode plate, the electrode plate includes a current collector and an active film layer disposed on at least a side of the current collector and containing an active material. During the charge and discharge cycles of the battery cell, active ions in the active materials migrate in the electrolyte. The conductivity of the electrolyte has a certain influence on the migration rate of active ions, and a lower conductivity is less conducive to the migration of active ions, resulting in poorer charge and discharge capability of the battery cell and deterioration of the rate performance of the battery cell.

In the related art, to enhance the migration rate of active ions, the conductivity of the electrolyte is typically increased. Further research has found that electrolyte systems with a high conductivity may face the problem of a narrower electrochemical window, so that the electrolyte systems are prone to decomposition and gas production, resulting in reduced reliability of use of the battery cell and difficulty in enhancing both the rate performance and reliability of use.

In view of this, an embodiment of this application provides a battery cell. The battery cell includes a linear ester solvent with a mass percentage greater than or equal to 25.5 wt%. This type of solvent has relatively high conductivity, which is conducive to enhancing the liquid phase transport capacity of active ions and enhancing the fast charging and discharging capabilities of the battery cell, thereby improving the rate performance of the battery cell. With this type of solvent, the problem of decomposition and gas production may occur during the charge and discharge cycle of the battery cell. However, the cylindrical structure of the shell of the battery cell enables even distribution of pressure inside the battery cell so that the shell is evenly stressed everywhere, which effectively increases the pressure resistance of the shell, thereby enhancing the reliability of use of the battery cell. Therefore, in the embodiments of this application, with the combination of the linear ester solvent and the cylindrical shell, the rate performance and the reliability of use of the battery cell can be effectively enhanced.

The battery cell described in the embodiments of this application is applicable to a battery and an electric apparatus using the battery.

The battery cell, battery, and electric apparatus disclosed in the embodiments of this application can be used in an electric apparatus that uses a battery as a power source or in various energy storage systems that use batteries as energy storage elements. The electric apparatus may be but is not limited to a mobile phone, a tablet computer, a laptop computer, an electric toy, an electric tool, an electric bicycle, an electric vehicle, a ship, and a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric apparatus being a vehicle is used as example for description of the following embodiments.

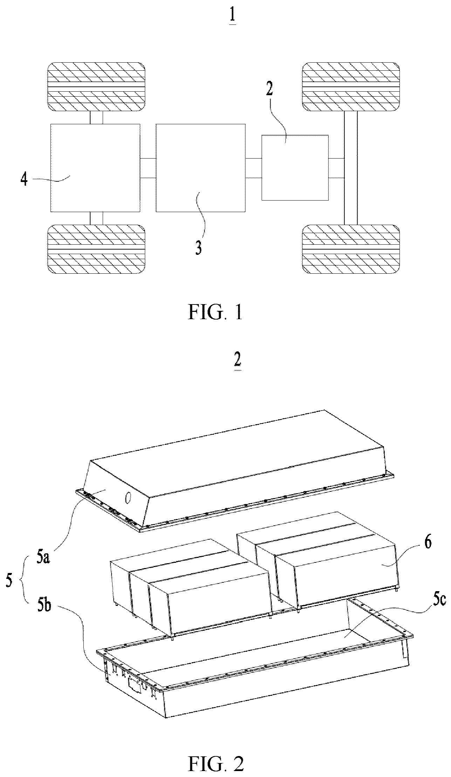

FIG. 1 is a schematic structural diagram of a vehicle according to some embodiments of this application.

As shown in FIG. 1, the vehicle 1 is provided with a battery 2 inside, and the battery 2 may be disposed at the bottom or in the front or at the rear of the vehicle 1. The battery 2 may be configured to supply power to the vehicle 1. For example, the battery 2 may be used as an operational power supply for the vehicle 1.

The vehicle 1 may further include a controller 3 and a motor 4, where the controller 3 is configured to control the battery 2 to supply power to the motor 4, for example, to satisfy power needs of start, navigation, and driving of the vehicle 1.

In some embodiments of this application, the battery 2 can be used as not only the operational power supply for the vehicle 1 but also a driving power supply for the vehicle 1, replacing all or a part of the fossil fuel or the natural gas to provide driving power for the vehicle 1.

FIG. 2 is a schematic exploded view of a battery according to some embodiments of this application. As shown in FIG. 2, the battery 2 includes a box 5 and a battery cell (not shown in FIG. 2), and the battery cell is accommodated in the box 5.

The box 5 is configured to accommodate the battery cell, and the box 5 may have various structures. In some embodiments, the box 5 may include a first box portion 5a and a second box portion 5b. The first box portion 5a and the second box portion 5b fit together to jointly define an accommodating space 5c for accommodating the battery cell. The second box portion 5b may be a hollow structure with an opening at one end, the first box portion 5a is a plate-shaped structure, and the first box portion 5a covers the opening side of the second box portion 5b so as to form the box 5 having the accommodating space 5c. Alternatively, both the first box portion 5a and the second box portion 5b may be hollow structures with an opening at one side, and the opening side of the first box portion 5a is engaged with the opening side of the second box portion 5b so as to form the box 5 having the accommodating space 5c. Certainly, the first box portion 5a and the second box portion 5b may be of various shapes, such as cylinder or cuboid.

In order to improve airtightness after connection of the first box portion 5a and the second box portion 5b, a sealing member, such as sealing gum and sealing ring, may further be disposed between the first box portion 5a and the second box portion 5b.

Assuming that the first box portion 5a fits on the top of the second box portion 5b, the first box portion 5a may also be referred to as an upper box part and the second box portion 5b may also be referred to as a lower box part.

There may be one or more battery cells in the battery 2. Under the condition that a plurality of battery cells are provided, the plurality of battery cells may be connected in series, parallel, or series and parallel, where being connected in series and parallel means a combination of series and parallel connections of the plurality of battery cells. The plurality of battery cells may be directly connected in series, parallel, or series and parallel, and then an entirety of the plurality of battery cells is accommodated in the box 5; or certainly, the battery may be formed by a plurality of battery cells being connected in series, parallel, or series and parallel first to form a battery module 6 and then a plurality of battery modules 6 being connected in series, parallel, or series and parallel to form an entirety, which is accommodated in the box 5.

The battery cell may refer to a smallest unit constituting a battery.

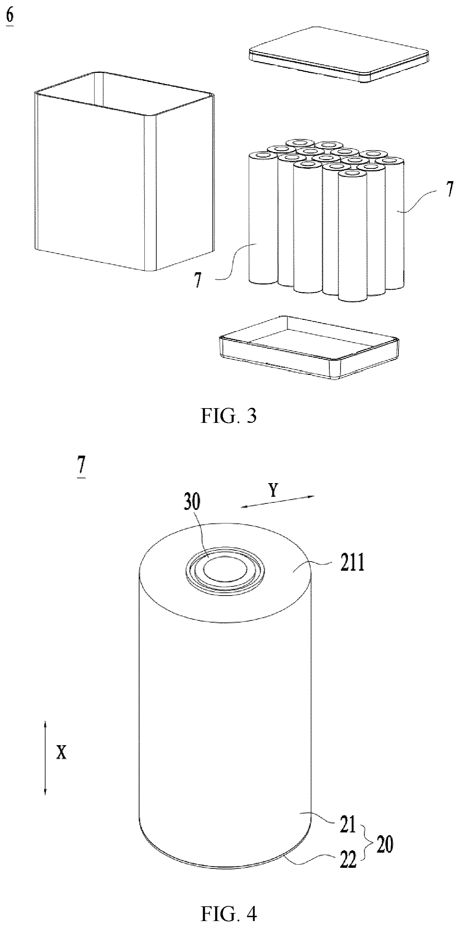

FIG. 3 is a schematic structural diagram of a battery module shown in FIG. 2.

In some embodiments, as shown in FIG. 3, there are a plurality of battery cells 7, and the plurality of battery cells 7 are connected in series, parallel, or series and parallel to form a battery module 6. A plurality of battery modules 6 are then connected in series, parallel, or series and parallel to form an entirety which is accommodated in the box.

The plurality of battery cells 7 in the battery module 6 may be electrically connected via a busbar, so that the plurality of battery cells 7 in the battery module are connected in parallel, series, or series and parallel. The number of busbars may be one or more, and each busbar is configured to electrically connect at least two battery cells 7.

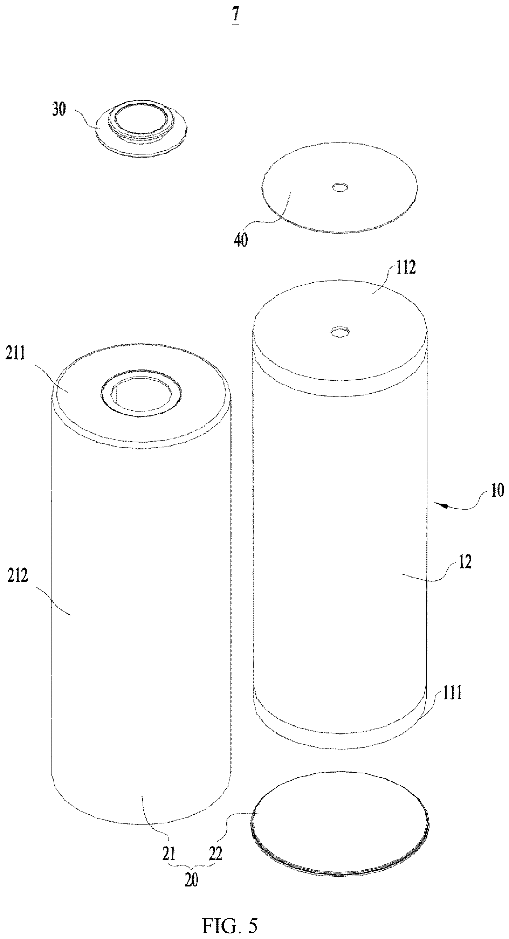

FIG. 4 is a schematic structural diagram of a battery cell 7 according to some embodiments of this application; and FIG. 5 is a schematic exploded view of the battery cell 7 shown in FIG. 4.

As shown in FIG. 4 and FIG. 5, in some embodiments, the battery cell 7 includes an electrode assembly 10, and a shell 20, and the electrode assembly 10 is accommodated in the shell 20.

The shell 20 is a cylindrical structure. The shell 20 includes a housing 21. The housing 21 is a cylindrical structure, and the shape of a corresponding electrode assembly 10 is also a cylindrical structure.

In some embodiments, a dimension of the shell 20 along an axial direction X of the battery cell 7 is 1.3 times to 2.5 times a dimension of the shell 20 along a radial direction Y of the battery cell 7, such as 1.3 times, 1.4 times, 1.5 times, 1.6 times, 1.7 times, 1.8 times, 1.9 times, 2.0 times, 2.1 times, 2.2 times, 2.3 times, 2.4 times, or 2.5 times, or a range defined by any two of the foregoing values. The shell 20 meeting the foregoing dimension requirements can effectively constrain volume swelling of the electrode assembly 10, so that the extrusion force on the shell 20 is evenly distributed and the shell 20 is not easily deformed, which can enhance the reliability of use of the battery cell 7.

For example, the dimension of the shell 20 along the axial direction X is 50 mm to 150 mm, such as 50 mm, 55 mm, 60 mm, 65 mm, 70 mm, 75 mm, 80 mm, 85 mm, 90 mm, 95 mm, 100 mm, 105 mm, 110 mm, 115 mm, 120 mm, 125 mm, 130 mm, 135 mm, 140 mm, 145 mm, or 150 mm, or a range defined by any two of the foregoing values.

For example, the dimension of the shell 20 along the radial direction Y is 40 mm to 80 mm, such as 40 mm, 45 mm, 50 mm, 55 mm, 60 mm, 65 mm, 70 mm, 75 mm, or 80 mm, or a range defined by any two of the foregoing values.

The electrode assembly 10 includes a positive electrode and a negative electrode. During the charge and discharge of the battery cell 7, active ions (for example, lithium ions) are intercalated and deintercalated back and forth between the positive electrode and the negative electrode. Optionally, the electrode assembly 10 further includes a separator disposed between the positive electrode and the negative electrode. The separator can reduce the risk of short circuit between the positive electrode and negative electrode while allowing active ions to pass through.

In some embodiments, the positive electrode may be a positive electrode plate. The positive electrode plate may include a positive electrode current collector and a positive electrode film layer disposed on at least one surface of the positive electrode current collector. The positive electrode film layer includes a positive electrode active material.

In an example, the positive electrode current collector has two opposite surfaces in its thickness direction, and the positive electrode film layer is disposed on either or both of the two opposite surfaces of the positive electrode current collector.

In an example, the positive electrode current collector may be a metal foil current collector or a composite current collector. For example, as the metal foil, stainless steel, copper, aluminum, nickel, carbon electrode, carbon, nickel, titanium, aluminum or stainless steel with silver surface treatment, or the like can be used. The composite current collector may include a polymer material matrix and a metal layer. The composite current collector may be formed by forming a metal material (aluminum, aluminum alloy, nickel, nickel alloy, titanium, titanium alloy, silver, silver alloy, or the like) on a polymer material matrix (for example, a matrix of polypropylene, polyethylene terephthalate, polybutylene terephthalate, polystyrene, or polyethylene).

In an example, when the battery cell 7 in the embodiments of this application is a lithium-ion battery, the positive electrode active material may include at least one of the following materials: phosphate, layered transition metal oxide and respective modified compounds thereof. Alternatively, the positive electrode active material may include layered transition metal oxides and respective modified compounds thereof, which is conducive to increasing the energy density of the battery cell 7. However, this application is not limited to such materials, and may alternatively use other conventional materials that can be used for the positive electrode film layer of the battery. One of these positive electrode active materials may be used alone, or two or more of them may be used in combination.

Examples of the phosphate may include but are not limited to at least one of lithium iron phosphate (for example, LiFePO₄ (LFP for short)), a composite material of lithium iron phosphate and carbon, lithium manganese phosphate (for example, LiMnPO₄), a composite material of lithium manganese phosphate and carbon, lithium manganese iron phosphate, or a composite material of lithium manganese iron phosphate and carbon.

The layered transition metal oxide includes at least one of a compound with a general formula LiₐNi_{b}Co_{c}M_{d}OₑA_{f} and modified compounds thereof, where 0.8 ≤ a ≤ 1.2, 0.3 ≤ b < 1, 0 < c < 1, 0 < d < 1, 1 ≤ e ≤ 2, 0 ≤ f ≤ 1, M includes at least one of Mn, Al, Zr, Zn, Cu, Cr, Mg, Fe, V, Ti, or B, and A includes at least one of N, F, S, or Cl. Optionally, 0.5 ≤ b < 1; and further optionally, 0.75 ≤ b ≤ 0.98.

Examples of layered transition metal oxides may include but are not limited to at least one of lithium cobalt oxides (for example, LiCoO₂), lithium nickel oxides (for example, LiNiO₂), lithium manganese oxides (for example, LiMnO₂, LiMn₂O₄), lithium nickel cobalt oxides, lithium manganese-manganese oxides, lithium nickel cobalt manganese oxides (for example, LiNi_{1/3}Co_{1/3}Mn_{1/3}O₂ (NCM333 for short), LiNi_{0.5}Co_{0.2}Mn_{0.3}O₂ (NCM523 for short), LiNi_{0.5}Co_{0.25}Mn_{0.25}O₂ (NCM211 for short), LiNi_{0.6}Co_{0.2}Mn_{0.2}O₂ (NCM622 for short), LiNi_{0.8}Co_{0.1}Mn_{0.1}O₂ (NCM811 for short), and LiNi_{0.9}Co_{0.05}Mn_{0.05}O₂ (Ni90 for short)), lithium-nickel-cobalt-aluminum oxides (for example, LiNi_{0.80}Co_{0.15}Al_{0.05}O₂), and modified compounds thereof.

When the battery cell 7 in the embodiments of this application is a sodium-ion battery, the positive electrode active material may include but is not limited to at least one of sodium-containing transition metal oxides, polyanionic materials (such as phosphate, fluorophosphate, pyrophosphate, and sulfate), and Prussian blue materials.

For example, the positive electrode active material for sodium-ion batteries may include at least one of NaFeO₂, NaCoO₂, NaCrO₂, NaMnO₂, NaNiO₂, NaNi_{1/2}Ti_{1/2}O₂, NaNi_{1/2}Mn_{1/2}O₂, Na_{2/3}Fe_{1/3}Mn_{2/3}O₂, NaNi_{1/3}Co_{1/3}Mn_{1/3}O₂, NaFePO₄, NaMnPO₄, NaCoPO₄, a Prussian blue material, and a material with a general formula XₚM'_{q}(PO₄)ᵣOₓY₃₋ₓ. In the general formula XₚM'_{q}(PO₄)ᵣOₓY₃₋ₓ, 0 < p ≤ 4, 0 < q ≤ 2, 1 ≤ r ≤ 3, 0 ≤ x ≤ 2, X includes at least one of H⁺, Li⁺, Na⁺, K⁺, or NH₄⁺, M' is a transition metal cation and optionally at least one of V, Ti, Mn, Fe, Co, Ni, Cu, or Zn, and Y is a halogen anion and optionally at least one of F, Cl, or Br.

In the embodiments of this application, the modified compounds of the foregoing positive electrode active materials may be obtained by doping modification and/or surface coating modification to the positive electrode active material, such as carbon coating modification and fast ion conductor coating modification.

The charging and discharging of the battery cell 7 is accompanied by deintercalation and consumption of active ions such as Li, and the battery cell 7 has a different molar concentration of Li when discharged to a different state. In the examples of positive electrode active materials in the embodiments of this application, the molar concentration of Li refers to an initial state of the material, that is, the state before feeding. When the positive electrode active material is applied to the battery system, the molar concentration of Li may change after charge and discharge cycles.

In the examples of positive electrode active materials in the embodiments of this application, the molar concentration of oxygen O is only a theoretical state value, and lattice oxygen release causes changes in the molar concentration of oxygen O. In reality, the molar concentration of oxygen O fluctuates.

In the embodiments of this application, the percentage of an element in the positive electrode active material has a meaning well known in the art and can be measured using a device and method well known in the art. For example, with reference to EPA 6010D-2014, the percentage of an element can be tested by inductively coupled plasma atomic emission spectroscopy and measured using a plasma atomic emission spectrometer (ICP-OES, instrument model: Thermo ICAP7400). First, 0.4 g of the positive electrode active material is weighted, and 10 ml of aqua regia (at a percentage of 50 wt%) is added thereto to form a mixture. Then the mixture is placed on a 180°C hot plate for 30 minutes. After digestion on a plate, the mixture is diluted to a volume of 100 mL, and a standard curve method is used for quantitative testing.

In some embodiments, the positive electrode can use metal foam. The metal foam may be nickel foam, copper foam, aluminum foam, alloy foam, carbon foam, or the like. When metal foam is used as the positive electrode, the positive electrode film layer may be not provided on the surface of the metal foam, and of course, the positive electrode film layer may alternatively be provided. In an example, the metal foam may alternatively be filled and/or deposited with a lithium source material, potassium metal, or sodium metal, where the lithium source material may be a lithium metal and/or a lithium-rich material.

In some embodiments, the positive electrode film layer further optionally includes a positive electrode conductive agent. The positive electrode conductive agent is not particularly limited in type in the embodiments of this application. In an example, the positive electrode conductive agent includes at least one of superconducting carbon, conductive graphite, acetylene black, carbon black, Ketjen black, carbon dots, carbon nanotubes, graphene, or carbon nanofibers. In some embodiments, a mass percentage of the positive electrode conductive agent in the positive electrode film layer is ≤ 5 wt%.

In some embodiments, the positive electrode film layer further optionally includes a positive electrode binder. The positive electrode binder is not particularly limited in type in the embodiments of this application. In an example, the positive electrode binder may include at least one of polyvinylidene fluoride (PVDF), polytetrafluoroethylene (PTFE), vinylidene fluoride-tetrafluoroethylene-propylene terpolymers, vinylidene fluoride-hexafluoropropylene-tetrafluoroethylene terpolymers, tetrafluoroethylene-hexafluoropropylene copolymers, or fluorine-containing acrylic resins. In some embodiments, a mass percentage of the positive electrode binder in the positive electrode film layer is ≤ 5 wt%.

The positive electrode film layer is typically formed by applying a positive electrode slurry onto the positive electrode current collector, followed by drying and cold pressing. The positive electrode slurry is typically formed by dispersing the positive electrode active material, the optional conductive agent, the optional binder, and any other components in a solvent and stirring them to uniformity. The solvent may be N-methylpyrrolidone (NMP), but is not limited thereto.

In some embodiments, the negative electrode may be a negative electrode plate. The negative electrode plate may include a negative electrode current collector and a negative electrode film layer disposed on at least one surface of the negative electrode current collector. The negative electrode film layer includes a negative electrode active material.

In an example, the negative electrode current collector includes two opposite surfaces in its thickness direction, and the negative electrode film layer is disposed on either or both of the two opposite surfaces of the negative electrode current collector.

In an example, the negative electrode current collector may be a metal foil, metal foam, or composite current collector. For example, as the metal foil, the negative electrode current collector may use aluminum or stainless steel with silver surface treatment, stainless steel, copper, aluminum, nickel, baked carbon, carbon, nickel, or titanium. The metal foam may be nickel foam, copper foam, aluminum foam, alloy foam, carbon foam, or the like. The composite current collector may include a polymer material matrix and a metal layer. The composite current collector may be formed by forming a metal material (copper, copper alloy, nickel, nickel alloy, titanium, titanium alloy, silver, silver alloy, or the like) on a polymer material matrix (for example, a matrix of polypropylene, polyethylene terephthalate, polybutylene terephthalate, polystyrene, or polyethylene).

In an example, the negative electrode active material may be a negative electrode active material well known in the art and used for battery cells 7. In an example, the negative electrode active material may include at least one of the following materials: a carbon material (for example, the carbon material includes at least one of artificial graphite, natural graphite, soft carbon, hard carbon), a silicon-based material, a tin-based material, lithium titanate, or the like. The silicon-based material may be at least one of elemental silicon, silicon-oxygen compounds, silicon-carbon composites, silicon-nitrogen composites, or silicon alloys. The tin-based materials may include at least one of elemental tin, tin-oxygen compounds, or tin alloys. However, this application is not limited to such materials, and may alternatively use other conventional materials that can be used for the negative electrode film layer of the battery. One of these negative electrode film layers may be used alone, or two or more of them may be used in combination.

In some embodiments, the negative electrode active material includes element silicon. Element silicon may be present in the form of a silicon-based material. For example, the silicon-based material may include at least one of elemental silicon, silicon-oxygen compounds, silicon-carbon composites, silicon-nitrogen composites, or silicon alloys. The introduction of element silicon can increase the energy density of the battery cell 7.

In some embodiments, a mass percentage of element silicon in the negative electrode film layer is 1 wt% to 32 wt%, optionally 2 wt% to 19 wt%, and further optionally 6 wt% to 13 wt%. In the battery cell 7 system, with the mass percentage of element silicon falling within the foregoing range, the energy density of the battery cell 7 can be increased. Moreover, the shell 20 of the cylindrical structure can constrain the swelling of the electrode assembly 10, ensuring that the force exerted by the electrode assembly 10 on the shell 20 is evenly distributed, making the shell 20 less prone to deformation, thereby enhancing the structural stability of the shell 20 and the reliability of use of the battery cell 7.

In the embodiments of this application, the mass percentage of element silicon in the negative electrode film layer has a meaning well known in the art, and can be measured using a device and method well known in the art. For example, the negative electrode plate is placed in a solvent such as water to soak, to separate the negative electrode active material from the negative electrode current collector, and the negative electrode active material is obtained by filtration. The percentage of element silicon can be obtained by analyzing the negative electrode active material using the ICAP7400 inductively coupled plasma emission spectrometer from Thermo Fisher Scientific, USA, with reference to the standard GB/T30902-2014.

In some embodiments, the negative electrode film layer further optionally includes a negative electrode conductive agent. The negative electrode conductive agent is not particularly limited in type in the embodiments of this application. In an example, the negative electrode conductive agent may include at least one of superconducting carbon, conductive graphite, acetylene black, carbon black, Ketjen black, carbon dots, carbon nanotubes, graphene, or carbon nanofibers. In some embodiments, a mass percentage of the negative electrode conductive agent in the negative electrode film layer is ≤ 5 wt%.

In some embodiments, the negative electrode film layer further optionally includes a negative electrode binder. The negative electrode binder is not particularly limited in type in the embodiments of this application. In an example, the negative electrode binder may include at least one of styrene-butadiene rubber (SBR), watersoluble unsaturated resin SR-1B, waterborne acrylic resin (for example, polyacrylic acid PAA, polymethylacrylic acid PMAA, and polyacrylic acid sodium PAAS), polyacrylamide (PAM), polyvinyl alcohol (PVA), sodium alginate (SA), or carboxymethyl chitosan (CMCS). In some embodiments, a mass percentage of the negative electrode binder in the negative electrode film layer is ≤ 5wt%.

In some embodiments, the negative electrode film layer further optionally includes another adjuvant. In an example, the another adjuvant may include a thickener, for example, sodium carboxymethyl cellulose (CMC-Na) or PTC thermistor material. In some embodiments, a mass percentage of the another adjuvant in the negative electrode film layer is ≤ 2 wt%.

In some embodiments, the positive electrode current collector may be made of material aluminum, and the negative electrode current collector may be made of material copper.

In some embodiments, the separator includes a separation film. The separation film is not particularly limited in type in this application, and may be any well-known porous separation film with good chemical stability and mechanical stability.

The separation film is not particularly limited in type in the embodiments of this application, and may be any well-known porous separation film with good chemical stability and mechanical stability.

In some embodiments, the material of the separation film may include one or more of glass fiber, non-woven fabric, polyethylene, polypropylene, and polyvinylidene fluoride. The separation film may be a single-layer film or a multi-layer composite film, which is not particularly limited. When the separation film is a multi-layer composite film, all layers may be made of the same or different materials, which is not particularly limited.

In some embodiments, the separation film may include a porous base film and a coating disposed on at least one side of the porous base film. The coating may include at least one of inorganic particles or organic particles.

The porous base film may include one or more of polyethylene and polypropylene.

Inorganic particles have good heat resistance and can improve the overall heat resistance of the separation film. In the operating voltage range of sodium-ion batteries, inorganic particles basically do not undergo oxidation and reduction reactions with metal dendrites. In other words, inorganic particles are configured not to undergo oxidation and reduction reactions with alkali metals and/or alkaline earth metals at the nominal voltage of a sodium-ion battery.

In some embodiments, the inorganic particles include one or more of boehmite γ-AlOOH, alumina Al₂O₃, aluminum hydroxide Al(OH)₃, barium sulfate BaSO₄, magnesium oxide MgO, magnesium hydroxide Mg(OH)₂, calcium oxide CaO, cerium oxide CeO₂, zirconium titanate SrTiO₃, barium titanate BaTiO₃, and magnesium fluoride MgF₂.

In some embodiments, the organic particles include at least one of polystyrene, polyethylene, polyimide, melamine resin, phenolic resin, polypropylene, polyester (such as polyethylene terephthalate, polyethylene naphthalate, polybutylene terephthalate), polyphenylene sulfide, polyamide, polyamide-imide, polyimide, copolymers of butyl acrylate and ethyl methacrylate, or mixtures thereof.

In some embodiments, the battery cell 7 also includes an electrolyte.

During the charge and discharge of the battery cell 7, active ions are intercalated and deintercalated back and forth between the positive electrode plate and the negative electrode plate. The electrolyte plays a role of conducting active ions between the positive electrode plate and the negative electrode plate. The electrolyte is not particularly limited in type in the embodiments of this application and may be selected according to actual needs.

The electrolyte includes an electrolytic salt and a solvent. The electrolytic salt and solvent are not specifically limited in type and may be selected according to actual needs.

In some embodiments, the electrolyte further optionally includes an additive. For example, the additive may include a negative electrode film-forming additive, or may include a positive electrode film-forming additive, or may include an additive that can improve some performance of the battery, for example, an additive for improving over-charge performance of the battery, an additive for improving high-temperature performance of the battery, and an additive for improving low-temperature performance of the battery.

For example, the additives include at least one of unsaturated bond-containing cyclic carbonate compounds, sulfate compounds, sulfite compounds, sultone compounds, disulfonic acid compounds, nitrile compounds, aromatic compounds, isocyanate compounds, phosphazene compounds, anhydrides, cyclic anhydride compounds, phosphite compounds, phosphate compounds, borate esters, or carboxylate compounds.

As shown in FIG. 4 and FIG. 5, in some embodiments, the electrode assembly 10 can be a wound structure or a stacked structure, and optionally, the electrode assembly 10 is a wound structure. The positive electrode plate and the negative electrode plate are wound into a wound structure.

In an example, multiple positive electrode plates and negative electrode plates can be provided respectively, and the multiple positive electrode plates and negative electrode plates are alternately stacked.

In some embodiments, the shell 20 includes a housing 21 and an end cover 22, where the housing 21 has an opening, and the end cover 22 is used to cover the opening.

The housing 21 is a component configured to form an internal cavity of the battery cell 7 together with the end cover 22, where the formed internal cavity may be configured to accommodate the electrode assembly 10, an electrolyte, and other components.

The housing 21 and the end cover 22 can be independent components. For example, an opening may be provided in the housing 21, and the end cover 22 covers the opening to form the internal cavity of the battery cell 7.

The end cover 22 is connected to the housing 21 by welding, bonding, snapping, or other methods.

An opening may be provided on one or two ends of the housing 21. In some examples, the housing 21 can be a structure with an opening on one side, and one end cover 22 is provided to cover the housing 21. In some other examples, the housing 21 can alternatively be a structure with an opening on two sides, and two end covers 22 are provided to cover the two openings of the housing 21.

In some embodiments, the housing 21 includes a side wall 212 and an end wall 211 connected to the side wall 212. The end wall 211 and the end cover 22 are opposite to each other along the axial direction of the battery cell 7. The end cover 22 is hermetically connected to the side wall 212, and the side wall 212 surrounds the electrode assembly 10.

In some embodiments, the end wall 211 and the side wall 212 may have the same polarity.

In some embodiments, the end wall 211 and the side wall 212 are integrally formed, which means that the housing 21 is an integrally form member. Of course, the end wall 211 and the side wall 212 can also be provided as two separate members and then connected together by welding, riveting, bonding, or other methods.

From the appearance of the electrode assembly 10, the electrode assembly 10 includes a main body 12, a first tab 111, and a second tab 112. The first tab 111 and the second tab 112 have opposite polarities. The first tab 111 and the second tab 112 both protrude from the main body 12. The first tab 111 is the part of the first electrode plate not coated with an active material layer, and the second tab 112 is the part of the second electrode plate not coated with an active material layer. The first tab 111 and the second tab 112 are configured to draw current out of the main body 12. The first electrode plate and the second electrode plate have opposite polarities. In other words, one of the first electrode plate and the second electrode plate is a positive electrode plate, and the other is a negative electrode plate.

Description is made in an example with the first tab 111 as a negative electrode tab and the second tab 112 as a positive electrode tab. The part of the negative electrode current collector in the negative electrode plate not coated with an active material layer is the negative electrode tab, and the active material coated on the negative electrode current collector in the negative electrode plate forms the negative electrode film layer. The negative electrode film layer and the part of the negative electrode current collector coated with active material form part of the main body 12. In the positive electrode plate, the part of the positive electrode current collector in the positive electrode plate not coated with an active material layer is the positive electrode tab, and the active material coated on the positive electrode current collector in the positive electrode plate forms the positive electrode film layer. The positive electrode film layer and the part of the positive electrode current collector coated with active material form part of the main body 12.

In some embodiments, the battery cell 7 includes a first electrode lead-out portion and a second electrode lead-out portion. The first electrode lead-out portion is electrically connected to the first tab 111, and the second electrode lead-out portion is electrically connected to the second tab 112.

In an axial direction of the main body 12, the first electrode lead-out portion and the second electrode lead-out portion may alternatively be located on two sides of the electrode assembly 10, or the first electrode lead-out portion and the second electrode lead-out portion may be located on a same side of the electrode assembly 10. For example, the second electrode lead-out portion includes an electrode terminal 30 insulated on the end wall 211, and the first electrode lead-out portion is the end wall 211.

The first tab 111 and the second tab 112 may protrude from the same side of the main body 12, or may protrude from opposite sides respectively.

The first tab 111 and the second tab 112 may be disposed on two sides of the main body 12 along its axial direction. In other words, the first tab 111 and the second tab 112 are disposed at two ends of the electrode assembly 10 along its axial direction.

Optionally, the first tab 111 is wound around the central axis of the electrode assembly 10 for multiple turns, and the first tab 111 includes multiple tab layers. After the winding is completed, the first tab 111 is generally cylindrical, and there is a gap between two adjacent tab layers. In the embodiments of this application, the first tab 111 can be processed to reduce the gap between tab layers, facilitating the connection of the first tab 111 with other conductive structures. For example, in the embodiments of this application, the first tab 111 may be kneaded and flattened, so that end portions of the first tab 111 away from the main body 12 are gathered together. A dense end surface is formed at an end of the first tab 111 away from the main body 12 by the kneading and flattening process, which reduces the gap between tab layers and facilitates the connection between the first tab 111 and other conductive structures. Alternatively, in this embodiment of this application, a conductive material may alternatively be filled between two adjacent tab layers, so as to reduce the gap between the tab layers.

Optionally, the second tab 112 is wound around the central axis of the electrode assembly 10 for multiple turns, and the second tab 112 includes multiple tab layers. For example, the second tab 112 has also undergone the kneading and flattening process so as to reduce the gap between the tab layers of the second tab 112.

The first tab 111 is electrically connected to the end cover 22. The first tab 111 can be directly electrically connected to the end cover 22 or indirectly electrically connected to the end cover 22 through other conductive structures, and the end cover 22 is electrically connected to the end wall 211.

The second tab 112 is electrically connected to the electrode terminal 30 of the battery cell 7, and the electrode terminal 30 is insulated on the end wall 211. The second tab 112 can be directly electrically connected to the electrode terminal 30 or indirectly electrically connected to the electrode terminal 30 through other conductive structures.

In some embodiments, the second tab 112 can be directly connected to the electrode terminal 30, for example, by welding, abutting, or other methods. Alternatively, the second tab 112 can also be indirectly connected to the electrode terminal 30 through other conductive components (such as a current collecting member 40) to achieve electrical connection between the second tab 112 and the electrode terminal 30.

The electrode terminal 30 is insulated on the end wall 211, so the electrode terminal 30 and the end wall 211 can have different polarities, and the electrode terminal 30 and the end wall 211 can serve as different output poles.

The end wall 211 can be provided with an electrode lead-out hole, and the electrode terminal 30 is insulated on the end wall 211 and installed in the electrode lead-out hole. The electrode lead-out hole facilitates leading out electrical energy from the electrode assembly 10 to the outside of the housing 21.

The central axis of the electrode assembly 10 is an imaginary line. The central axis of the electrode assembly 10 may pass through the electrode lead-out hole or be offset from the electrode lead-out hole, which is not limited in this application.

The electrode terminal 30 may be fixed on the end wall 211. The electrode terminal 30 may be integrally fixed on the outside of the end wall 211 or extend into the interior of the shell 20 through the electrode lead-out hole.

When the first tab 111 is a negative electrode tab and the second tab 112 is a positive electrode tab, the end wall 211 is a negative output pole of the battery cell 7, and the electrode terminal 30 is a positive output pole of the battery cell 7. When the first tab 111 is a positive electrode tab and the second tab 112 is a negative electrode tab, the end wall 211 is a positive output pole of the battery cell 7, and the electrode terminal 30 is a negative output pole of the battery cell 7.

In some embodiments, the battery cell 7 includes a shell 20, an electrode assembly 10, and an electrolyte. The electrode assembly 10 and the electrolyte are accommodated in the shell 20, where the shell 20 is a cylindrical structure. The electrolyte includes a linear ester solvent, and a mass percentage of the linear ester solvent in the electrolyte is greater than or equal to 25.5 wt%.

The mass percentage of the linear ester solvent is greater than or equal to 25.5 wt%, so that the conductivity of the electrolyte is relatively high, which is conducive to enhancing the liquid phase transport capacity of active ions and enhancing the fast charging and discharging capabilities of the battery cell 7, thereby improving the rate performance of the battery cell 7. With this type of solvent, the problem of decomposition and gas production may occur during the charge and discharge cycle of the battery cell 7. However, the cylindrical structure of the shell 20 of the battery cell 7 enables even distribution of pressure inside the battery cell 7 so that the shell 20 is evenly stressed everywhere, which effectively increases the pressure resistance of the shell 20, thereby enhancing the reliability of use of the battery cell 7.

In addition, the extrusion and reflux of the electrolyte occur in the electrode assembly 10 during the charge and discharge cycle. Due to the cylindrical structure of the shell 20, the axial dimension of the battery cell 7 may be much greater than its radial dimension, resulting in a longer reflux path for the electrolyte along the axial direction, so that it is difficult to fully infiltrate the electrode assembly 10. In the embodiments of this application, the electrolyte uses a linear ester solvent, and the mass percentage of the linear ester solvent is greater than or equal to 25.5 wt%, enabling the electrolyte system to have relatively low viscosity and to flow more easily and infiltrate the electrode assembly 10. This can improve the fast charging and discharging capabilities of the battery cell 7, thereby improving the rate performance of the battery cell 7.

Therefore, the combined use of the specific electrolyte system and the cylindrical shell 20 in the embodiments of this application can improve both the rate performance and the reliability of use of the battery cell 7.

In some embodiments, the mass percentage of the linear ester solvent in the electrolyte is 25.5 wt% to 76.5 wt%, optionally, 25.5 wt% to 70 wt%, and further optionally, 42.5 wt% to 70 wt%. With the mass percentage of the linear ester solvent falling within the foregoing range, the rate performance and reliability of use of the battery cell 7 can be further improved, and the cycling performance of the battery cell 7 can also be further improved.

For example, the mass percentage of the linear ester solvent in the electrolyte be 25.5 wt%, 26 wt%, 27 wt%, 28 wt%, 29 wt%, 30 wt%, 32 wt%, 35 wt%, 38 wt%, 40 wt%, 42 wt%, 45 wt%, 48 wt%, 50 wt%, 52 wt%, 55 wt%, 58 wt%, 60 wt%, 62 wt%, 65 wt%, 68 wt%, 70 wt%, 72 wt%, 75 wt%, or 76.5 wt%, or a range defined by any two of the foregoing values.

In some embodiments, the linear ester solvent includes a linear carbonate. The linear carbonate can be used to improve the conductivity of the electrolyte, enhance the liquid phase transport kinetic performance of the electrolyte, and further improve the rate performance and reliability of use of the battery cell 7.

In some embodiments, the mass percentage of the linear carbonate in the electrolyte is 4 wt% to 70 wt%, and optionally, the mass percentage of the linear carbonate is 4 wt% to 42.5 wt%, optionally 8.5 wt% to 35 wt%. With the mass percentage of the linear carbonate falling within the foregoing range, the conductivity of the electrolyte can be improved, improving the liquid phase transport kinetic performance of the electrolyte, further improving the rate performance and reliability of use of the battery cell 7, and also further improving the cycling performance of the battery cell 7.

For example, the mass percentage of the linear carbonate in the electrolyte may be 4 wt%, 4.5 wt%, 5 wt%, 8 wt%, 10 wt%, 12 wt%, 15 wt%, 18 wt%, 20 wt%, 22 wt%, 25 wt%, 30 wt%, 35 wt%, 40 wt%, 45 wt%, 50 wt%, 55 wt%, 60 wt%, 65 wt%, or 70 wt%, or a range defined by any two of the foregoing values.

In some embodiments, the linear carbonate includes a compound represented by formula I, 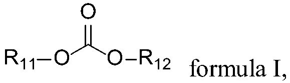 where
in formula I, R₁₁ and R₁₂ each independently include a C1 to C3 alkyl group or a C1 to C3 haloalkyl group; and when the linear carbonate is made of the foregoing materials, the rate performance and reliability of use of the battery cell 7 can be further improved, and the cycling performance of the battery cell 7 can also be further improved.

In some embodiments, R₁₁ and R₁₂ each independently include a C1 to C3 alkyl group or a C1 to C3 fluoroalkyl group.

For example, the linear carbonate includes one or more of compounds represented by formula I-1 to formula I-6,

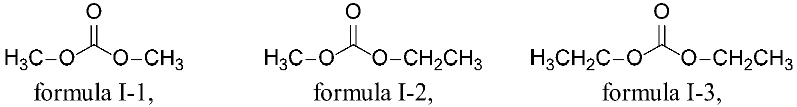

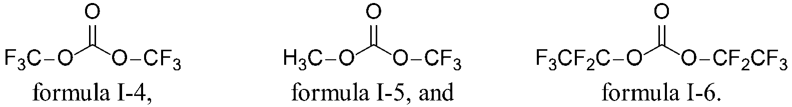

Optionally, the linear carbonate includes a compound represented by formula I-1,

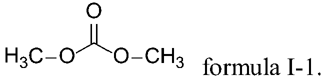

For example, the linear carbonate includes a compound represented by formula I-1, and a mass percentage of the compound represented by formula I-1 in the electrolyte is 4 wt% to 42.5 wt%, optionally 8.5 wt% to 35 wt%.

In some embodiments, the linear ester solvent also includes a linear carboxylate. The combined use of the linear carboxylate and the linear carbonate can improve the conductivity of the electrolyte, enhance the liquid phase transport kinetic of the electrolyte, further improves the rate performance and reliability of use of the battery cell 7, and also further improve the cycling performance of the battery cell 7. Certainly, the linear carboxylate can also be used as a solvent system alone.

In some embodiments, the mass percentage of the linear carboxylate in the electrolyte is 4 wt% to 70 wt%, optionally, 8.5 wt% to 60 wt%, and optionally, 20 wt% to 55 wt%. With the mass percentage of the linear carboxylate in the electrolyte falling within the foregoing range, the conductivity of the electrolyte can be improved, enhancing the liquid phase transport kinetic of the electrolyte and further improving the rate performance and reliability of use of the battery cell 7.

For example, the mass percentage of the linear carboxylate in the electrolyte be 4 wt%, 4.5 wt%, 5 wt%, 8 wt%, 8.5 wt%, 10 wt%, 12 wt%, 15 wt%, 18 wt%, 20 wt%, 22 wt%, 25 wt%, 30 wt%, 35 wt%, 40 wt%, 45 wt%, 50 wt%, 55 wt%, 60 wt%, 65 wt%, or 70 wt%, or a range defined by any two of the foregoing values.

In some embodiments, the linear carboxylate includes a compound represented by formula II, 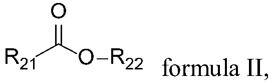 where
in formula II,
R₂₁ includes a hydrogen atom, a halogen atom, a C1 to C3 alkyl group, or a C1 to C3 haloalkyl group; and
R₂₂ includes a C1 to C3 alkyl group or a C1 to C3 haloalkyl group.

In some embodiments, R₂₁ includes a hydrogen atom, a fluorine atom, a C1 to C3 alkyl group, or a C1 to C3 fluoroalkyl group.

In some embodiments, R₂₂ includes a C1 to C3 alkyl group or a C1 to C3 fluoroalkyl group.

For example, the linear carboxylate includes one or more of compounds represented by formula II-1 to formula II-6,

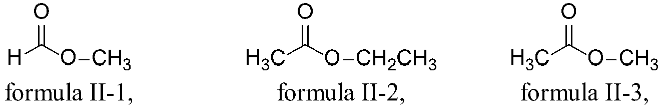

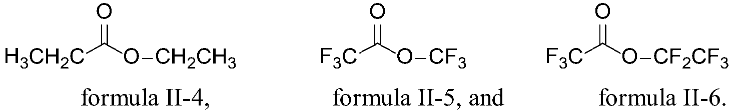

Optionally, for example, the linear carboxylate includes one or more of compounds represented by formula II-1 to formula II-6,

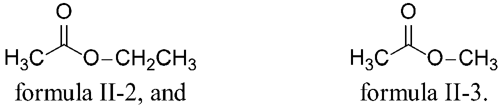

The linear carboxylate can include various optional schemes.

For example, the linear carboxylate includes a compound represented by formula II-2, and a mass percentage of the compound represented by formula II-2 in the electrolyte is 20 wt% to 55 wt%.

For another example, the linear carboxylate includes a compound represented by formula II-3, and a mass percentage of the compound represented by formula II-3 in the electrolyte is 20 wt% to 55 wt%.

For yet another example, the linear carboxylate includes a compound represented by formula II-2 and a compound represented by formula II-3, and a mass percentage of the compound represented by formula II-2 and the compound represented by formula II-3 in the electrolyte is 20 wt% to 55 wt%.

For example, the linear ester solvent of the electrolyte may include a compound represented by formula I-1 and a compound represented by formula II-2, and the mass percentage of the linear ester solvent in the electrolyte is 25.5 wt% to 76.5 wt%, optionally 25.5 wt% to 70 wt%, and optionally 42.5 wt% to 70 wt%. For example, the mass percentage of the compound represented by formula I-1 in the electrolyte is 8.5 wt% to 35 wt%, and the mass percentage of the compound represented by formula II-2 is 20 wt% to 55 wt%.

For example, the linear ester solvent of the electrolyte may include a compound represented by formula I-1 and a compound represented by formula II-3, and the mass percentage of the linear ester solvent in the electrolyte is 25.5 wt% to 76.5 wt%, optionally 25.5 wt% to 70 wt%, and optionally 42.5 wt% to 70 wt%. For example, the mass percentage of the compound represented by formula I-1 in the electrolyte is 8.5 wt% to 35 wt%, and the mass percentage of the compound represented by formula II-3 in the electrolyte is 20 wt% to 55 wt%.

For example, the linear ester solvent of the electrolyte can include a compound represented by formula I-1, a compound represented by formula II-2, and a compound represented by formula II-3, with a mass percentage of the linear ester solvent in the electrolyte being 25.5 wt% to 76.5 wt%, optionally 25.5 wt% to 70 wt%, and optionally 42.5 wt% to 70 wt%. For example, a mass percentage of the compound represented by formula I-1 in the electrolyte is 8.5 wt% to 35 wt%, a mass percentage of the compound represented by formula II-2 in the electrolyte is 8.5 wt% to 35 wt%, and a mass percentage of the compound represented by formula II-3 in the electrolyte is 8.5 wt% to 35 wt%.

The shell 20 is a cylindrical structure. The shell 20 includes a housing 21. The housing 21 may be a cylindrical structure, and the shape of a corresponding electrode assembly 10 is also a cylindrical structure. In addition, the shell 20 may be made of various materials. For example, the matrix material of the shell 20 includes but is not limited to copper, iron, aluminum, steel, and aluminum alloy. Optionally, the matrix material of the shell 20 includes steel, such as stainless steel. For example, the matrix material of the housing 21 includes steel, such as stainless steel. A shape of the end cover 22 may be adapted to the shape of the housing 21 to fit the housing 21. The matrix material of the end cover 22 may be the same as or different from that of the housing 21. Optionally, the end cover 22 may be made of a material with specified hardness and strength (for example, copper, iron, aluminum, steel, aluminum alloy, or plastic), so that the end cover 22 is less likely to deform when subjected to extrusion and collision, allowing the battery cell 7 to have higher structural strength and enhanced reliability. Optionally, the matrix material of the end cover 22 may include steel, such as stainless steel. In the embodiments of this application, the matrix material is a material with the largest proportion.

In some embodiments, the shell 20 includes a housing 21 and an end cover 22. The housing 21 includes a side wall 212 and an end wall 211 connected to the side wall 212. The housing 21 has an opening, and the end cover 22 is connected to the side wall 212 and covers the opening. The end cover 22 and the end wall 211 are opposite to each other along the axial direction of the shell 20.

In some embodiments, the side wall 212 and the end wall 211 are integrally formed.

In some embodiments, the matrix material of the side wall 212 includes steel, and a thickness of the side wall 212 is 0.30 mm to 1.2 mm, optionally 0.30 mm to 0.55 mm. With the thickness of the side wall 212 falling within the foregoing range, the side wall 212 has higher strength and a stronger ability to withstand pressure, which can effectively alleviate the risk of deformation of the side wall 212 and reduce the risk of swelling of the battery cell 7, thereby enhancing the reliability of use of the battery cell 7.

For example, the thickness of the side wall 212 may be 0.30 mm, 0.31 mm, 0.32 mm, 0.35 mm, 0.38 mm, 0.4 mm, 0.45 mm, 0.48 mm, 0.5 mm, 0.55 mm, 0.6 mm, 0.65 mm, 0.7 mm, 0.75 mm, 0.8 mm, 0.85 mm, 0.9 mm, 0.95 mm, 1 mm, 1.05 mm, 1.1 mm, 1.15 mm, or 1.5 mm, or a range defined by any two of the foregoing values.

In some embodiments, under the condition that the matrix material of the side wall 212 includes steel and the thickness of the side wall 212 is 0.30 mm to 1.2 mm, the mass percentage of the linear ester solvent is 25.5 wt% to 76.5 wt%. With the mass percentage of the linear ester solvent falling within the foregoing range, the rate performance of the battery cell 7 can be enhanced, but some gas is produced in the battery cell 7, resulting in the risk of swelling of the battery cell 7. However, when the thickness of the shell 20 in the embodiments of this application is within the foregoing range, the shell 20 has higher strength and a stronger ability to withstand pressure, which can effectively alleviate the risk of deformation of the shell 20 and reduce the risk of swelling of the battery cell 7, thereby enhancing the reliability of use of the battery cell 7 and also improving the cycling performance of the battery cell 7.

In some embodiments, the matrix material of the side wall 212 includes steel and the thickness of the side wall 212 is 0.30 mm to 0.55 mm, the mass percentage of the linear ester solvent is 25.5 wt% to 70 wt%. With the combination of the thickness of the shell 20 and the mass percentage of the linear ester solvent, both the rate performance and reliability of use of the battery cell 7 can be enhanced, and the cycling performance of the battery cell 7 can be improved.

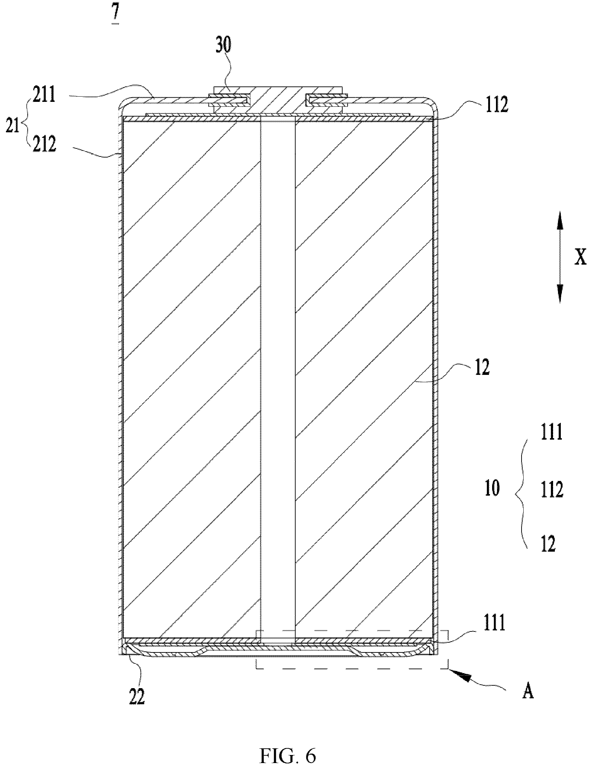

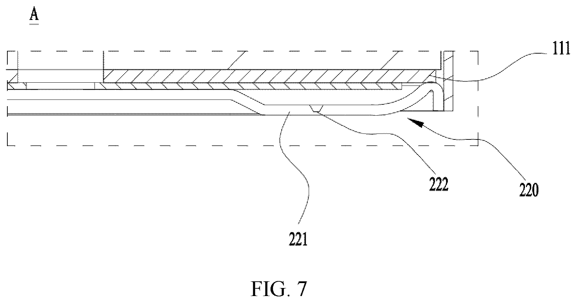

FIG. 6 is a schematic cross-sectional diagram of a battery cell 7 according to some embodiments of this application; and FIG. 7 is an enlarged schematic diagram of the battery cell 7 at position A shown in FIG. 6.

As shown in FIGs. 6 and 7, in some embodiments, the shell 20 includes a housing 21 and an end cover 22. The housing 21 has an opening, the end cover 22 is connected to the housing 21 and covers the opening, and the end cover 22 is provided with a pressure relief mechanism 220.

When a phenomenon such as short circuit or overcharge occurs, the electrolyte reacts with the active material and releases gas and heat. The pressure relief mechanism 220 is configured to deform when the internal pressure or temperature of the shell 20 reaches a threshold, so that the internal space of the shell 20 communicates with the external space to relieve pressure or temperature inside the shell 20. The deformation of the pressure relief mechanism 220 includes but is not limited to rupture and melting. Design of the threshold varies with different design requirements. The threshold may depend on the material of one or more of the positive electrode plate, negative electrode plate, electrolyte, and separator in the battery cell 7.

In the embodiments of this application, the deformation of the pressure relief mechanism 220 may be triggered by the internal pressure of the shell 20, the internal temperature of the shell 20, or a combination of the internal pressure and temperature of the shell 20.

In an example, as gases inside the shell 20 continue to accumulate, the internal pressure of the shell 20 may reach or even exceed the pressure threshold. When the internal pressure of the shell 20 reaches the threshold, the pressure relief mechanism 220 deforms under the action of the internal pressure, so that the internal space of the shell 20 communicates with the external space, and gases inside the shell 20 can be discharged, thereby reducing the risk of explosion of the battery cell 7.

In an example, when the electrolyte and active materials react and quickly release heat, causing the internal temperature of the shell 20 to rise, the rising temperature also leads to an increase in the internal pressure of the shell 20. Under the condition that the internal temperature of the shell 20 reaches a threshold, the pressure relief mechanism 220 can deform under the action of temperature and pressure, so that the internal space of the shell 20 communicates with the external space, and gases inside the shell 20 can be discharged, thereby reducing the risk of explosion of the battery cell 7.

Under the condition that the internal pressure or temperature of the shell 20 reaches the threshold, in the embodiments of this application, the deformation of the pressure relief mechanism 220 can be utilized to communicate the internal space of the shell 20 with the external space, thereby releasing the internal gases and pressure of the shell 20 and reducing the risk of rupture of the battery cell 7.

In some embodiments, the end cover 22 is provided with a recess 221, and the bottom wall of the recess 221 is a weak portion 222. The weak portion 222 is configured to rupture when the internal pressure of the battery cell 7 reaches the threshold, to relieve the internal pressure.

When the weak portion 222 ruptures, a channel for relief of internal pressure forms. When the weak portion 222 ruptures, the internal gases of the battery cell 7 is discharged from the ruptured part. In this way, the pressure of the battery cell 7 can be relieved under controllable pressure, thereby avoiding potentially more serious accidents.

In some embodiments, the matrix material of the weak portion 222 includes steel, and a thickness of the weak portion 222 is 0.01 mm to 0.3 mm, optionally 0.05 mm to 0.2 mm. With the thickness of the weak portion 222 falling within the foregoing range, the weak portion 222 has higher strength and a stronger ability to withstand pressure, which can effectively enhance the pressure resistance of the battery cell 7, enhancing the reliability of use of the battery cell 7.

For example, the thickness of the weak portion 222 may be 0.01 mm, 0.02 mm, 0.03 mm, 0.04 mm, 0.05 mm, 0.06 mm, 0.07 mm, 0.08 mm, 0.09 mm, 0.1 mm, 0.11 mm, 0.12 mm, 0.13 mm, 0.14 mm, 0.15 mm, 0.16 mm, 0.17 mm, 0.18 mm, 0.19 mm, or 0.2 mm, or a range defined by any two of the foregoing values.

In some embodiments, under the condition that the matrix material of the weak portion 222 includes steel and the thickness of the weak portion 222 is 0.01 mm to 0.3 mm, the mass percentage of the linear ester solvent is 25.5 wt% to 76.5 wt%. With the mass percentage of the linear ester solvent falling within the foregoing range, the rate performance of the battery cell 7 can be enhanced, but some gas is produced in the battery cell 7, resulting in the risk of swelling of the battery cell 7. However, when the thickness of the weak portion 222 in the embodiments of this application is within the foregoing range, the weak portion 222 has higher strength and a stronger ability to withstand pressure, which can effectively enhance the pressure resistance of the battery cell 7, enhancing the reliability of use of the battery cell 7.

In some embodiments, the matrix material of the weak portion 222 includes steel, the thickness of the weak portion 222 is 0.05 mm to 0.2 mm, and the mass percentage of the linear ester solvent is 25.5 wt% to 70 wt%. With the combination of the thickness of the shell 20 and the mass percentage of the linear ester solvent, both the rate performance and reliability of use of the battery cell 7 can be enhanced.

In some embodiments, the electrolyte includes an electrolytic salt. The electrolytic salt includes a hexafluorophosphate and a sulfonylimide. The combined use of the hexafluorophosphate and the sulfonylimide results in a relatively high thermal stability of the electrolyte system, which can enhance the stability of the electrolyte and improve the cycling performance of the battery cell 7.

The hexafluorophosphate may include one or more of lithium hexafluorophosphate, sodium hexafluorophosphate, and the like. The sulfonylimide may include one or more of lithium sulfonylimide, sodium sulfonylimide, and the like.

In some embodiments, the molar concentration of the hexafluorophosphate is less than or equal 0.9 mol/L, optionally 0.2 mol/L to 0.8 mol/L, and further optionally 0.3 mol/L to 0.7 mol/L. With the molar concentration of the hexafluorophosphate falling within the foregoing range, the corrosion on the shell 20 can be further reduced, especially, the corrosion on the shell 20 made of a metal material, and the reliability of use and cycling performance of the battery cell 7 can be enhanced.

For example, the molar concentration of the hexafluorophosphate may be 0.1 mol/L, 0.15 mol/L, 0.2 mol/L, 0.25 mol/L, 0.3 mol/L, 0.35 mol/L, 0.4 mol/L, 0.45 mol/L, 0.5 mol/L, 0.55 mol/L, 0.6 mol/L, 0.65 mol/L, 0.7 mol/L, 0.75 mol/L, 0.8 mol/L, 0.85 mol/L, or 0.9 mol/L, or a range defined by any two of the foregoing values.

In some embodiments, a ratio of a molar concentration of the sulfonylimide to the molar concentration of the hexafluorophosphate is 0.06 to 6, optionally 0.2 to 2, and more optionally 0.3 to 1.5. With the ratio of the molar concentration of the sulfonylimide to the molar concentration of the hexafluorophosphate falling within the foregoing range, the electrolytic salt has excellent thermal stability and is not prone to thermal decomposition that would lead to acid corrosion. Moreover, the electrolytic salt has excellent electrochemical stability, which can further enhance the stability of the electrolytic salt, enhancing the reliability of use and cycling performance of the battery cell 7.

For example, the ratio of the molar concentration of the sulfonylimide to the molar concentration of the hexafluorophosphate is 0.06, 0.08, 0.1, 0.15, 0.2, 0.25, 0.3, 0.35, 0.4, 0.45, 0.5, 0.6, 0.7, 0.8, 0.9, 1, 1.1, 1.2, 1.3, 1.4, 1.5, 1.6, 1.7, 1.8, 1.9, 2, 2.2, 2.5, 2.8, 3, 3.2, 3.5, 3.8, 4, 4.2, 4.5, 4.8, 5, 5.2, 5.5, 5.8, or 6, or a range defined by any two of the foregoing values.

In some embodiments, the molar concentration of the electrolytic salt is 0.5 mol/L to 2 mol/L, and optionally the molar concentration of the electrolytic salt is 0.6 mol/L to 1.5 mol/L. With the molar concentration of the electrolytic salt falling within the foregoing range, it is conducive to further enhancing the stability of the electrolytic salt, enhancing the reliability of use and cycling performance of the battery cell 7; and it is also conducive to enhancing the liquid phase transport capacity of active ions, thereby improving the kinetic performance of the battery cell 7.

For example, the molar concentration of the electrolytic salt may be 0.5 mol/L, 0.55 mol/L, 0.6 mol/L, 0.65 mol/L, 0.7 mol/L, 0.8 mol/L, 0.9 mol/L, 1 mol/L, 1.1 mol/L, 1.2 mol/L, 1.3 mol/L, 1.4 mol/L, 1.5 mol/L, 1.6 mol/L, 1.7 mol/L, 1.8 mol/L, 1.9 mol/L, or 2 mol/L, or a range defined by any two of the foregoing values.

The shell 20 includes a shell body and a film layer, where the film layer is disposed on at least a surface of the shell body facing the electrode assembly 10, and a matrix element of the film layer is element nickel.

The matrix element of the film layer is element nickel, which significantly enhances the acid corrosion resistance of the film layer and reduces the risk of generating metal ions from metal corrosion in the shell 20. In addition, the shell 20 of the battery cell 7 can effectively disperse the forces within the system, ensuring that the shell 20 is uniformly stressed and not prone to deformation. This is conducive to enhancing the reliability of use and cycling performance of the battery cell 7. In the embodiments of this application, the matrix element refers to an element with the highest proportion in the film layer. Element nickel may be present in the film layer in the form of elemental nickel or a nickel alloy, where the nickel alloy may be an alloy composed of nickel as the matrix element and iron and carbon as auxiliary elements.

The film layer can play a protective role for the shell body, and the shell body may be made of various materials. For example, a matrix material of the shell body includes but is not limited to copper, iron, aluminum, steel, and aluminum alloy. Optionally, the matrix material of the shell body includes steel, for example, stainless steel, which has excellent mechanical strength, is not prone to deformation, and can further improve the reliability of use of the battery cell 7. In the embodiments of this application, the matrix material is a material with the largest proportion, and certainly, the shell body can alternatively be made of steel material.

The shell 20 includes a housing 21 and an end cover 22. The housing 21 may include a shell body, and in this case, the housing 21 includes a shell body and a film layer. The end cover 22 may include a shell body, and in this case, the end cover 22 includes a shell body and a film layer. Alternatively, both the housing 21 and the end cover 22 include a shell body.

In some embodiments, a thickness of the film layer is 1.5 µm to 6.0 µm, optionally 2.0 µm to 4.0 µm. With the thickness of the film layer falling within the foregoing range, it is conducive to improving the acid corrosion resistance of the film layer, thereby enhancing the reliability of use and cycling performance of the battery cell 7.

For example, the thickness of the film layer may be 1.5 µm, 1.8 µm, 2 µm, 2.5 µm, 3 µm, 3.5 µm, 4 µm, 4.5 µm, 5 µm, 5.5 µm, 6 µm, or 6.5 µm, or a range defined by any two of the foregoing values.

In some embodiments, the mass percentage of element nickel in the film layer is 70 wt% to 100 wt%, optionally 80 wt% to 95 wt%. With the mass percentage of element nickel falling within the foregoing range, the acid corrosion resistance of the film layer is enhanced, so that the reliability of use and cycling performance of the battery cell 7 can be enhanced.

For example, the mass percentage of element nickel in the film layer may be 70 wt%, 71 wt%, 72 wt%, 73 wt%, 74 wt%, 75 wt%, 76 wt%, 80 wt%, 82 wt%, 85 wt%, 88 wt%, 90 wt%, 92 wt%, 95 wt%, 98 wt%, 99 wt%, or 100 wt%, or a range defined by any two of the foregoing values.

In some embodiments, the film layer further includes element iron, and a mass percentage of element iron in the film layer is 0.1 wt% to 10 wt%, optionally 1 wt% to 5 wt%. With the mass percentage of element iron falling within the foregoing range, the conductivity of the shell 20 can be effectively improved, which is conducive to electron transport.

For example, the mass percentage of element iron in the film layer may be 0.1 wt%, 0.5 wt%, 0.8 wt%, 1 wt%, 1.2 wt%, 1.5 wt%, 2 wt%, 2.5 wt%, 3 wt%, 3.5 wt%, 4 wt%, 4.5 wt%, 5 wt%, 5.5 wt%, 6 wt%, 6.5 wt%, 7 wt%, 7.5 wt%, 8 wt%, 8.5 wt%, 9 wt%, or 10 wt%, or a range defined by any two of the foregoing values.

In some embodiments, the film layer further includes element carbon, and a mass percentage of element carbon in the film layer is 0.1 wt% to 15 wt%, optionally 4 wt% to 12 wt%. With the mass percentage of element carbon falling within the foregoing range, the conductivity of the shell 20 can be effectively improved, which is conducive to electron transport.

For example, the mass percentage of element carbon in the film layer may be 0.1 wt%, 0.5 wt%, 0.8 wt%, 1 wt%, 1.2 wt%, 1.5 wt%, 2 wt%, 2.5 wt%, 3 wt%, 3.5 wt%, 4 wt%, 4.5 wt%, 5 wt%, 5.5 wt%, 6 wt%, 6.5 wt%, 7 wt%, 7.5 wt%, 8 wt%, 8.5 wt%, 9 wt%, 10 wt%, 11 wt%, 12 wt%, 13 wt%, 14 wt%, or 15 wt%, or a range defined by any two of the foregoing values.

In some embodiments, under the condition that the molar concentration of the hexafluorophosphate is 0.2 mol/L to 0.8 mol/L, the thickness of the film layer is 1.5 µm to 6.0 µm. When the molar concentration of the hexafluorophosphate is matched with the thickness of the film layer, both the reliability of use and the cycling performance of the battery cell 7 can be improved.

In some embodiments, under the condition that the molar concentration of the hexafluorophosphate is 0.3 mol/L to 0.7 mol/L, the thickness of the film layer is 2.0 µm to 4.0 µm. When the molar concentration of the hexafluorophosphate is matched with the thickness of the film layer, both the reliability of use and the cycling performance of the battery cell 7 can be improved.

In some embodiments, under the condition that the molar concentration of the hexafluorophosphate is 0.2 mol/L to 0.8 mol/L, the mass percentage of element nickel in the film layer is 70 wt% to 100 wt%. When the molar concentration of the hexafluorophosphate is matched with the mass percentage of element nickel in the film layer, both the reliability of use and the cycling performance of the battery cell 7 can be improved.

In some embodiments, under the condition that the molar concentration of the hexafluorophosphate is 0.3 mol/L to 0.7 mol/L, the mass percentage of element nickel in the film layer is 80 wt% to 95 wt%. When the molar concentration of the hexafluorophosphate is matched with the mass percentage of element nickel in the film layer, both the reliability of use and the cycling performance of the battery cell 7 can be improved.

In some embodiments, under the condition that the ratio of the molar concentration of the sulfonylimide to the molar concentration of the hexafluorophosphate is 0.06 to 6, the thickness of the film layer is 1.5 µm to 6.0 µm. When the electrolytic salt is matched with the thickness of the film layer, both the reliability of use and the cycling performance of the battery cell 7 can be improved.

In some embodiments, under the condition that the ratio of the molar concentration of the sulfonylimide to the molar concentration of the hexafluorophosphate is 0.2 to 2, the thickness of the film layer is 2.0 µm to 4.0 µm. When the electrolytic salt is matched with the thickness of the film layer, both the reliability of use and the cycling performance of the battery cell 7 can be improved.

In some embodiments, under the condition that the ratio of the molar concentration of the sulfonylimide to the molar concentration of the hexafluorophosphate is 0.06 to 6, the mass percentage of element nickel is 70 wt% to 100 wt%. When the electrolytic salt is matched with the mass percentage of element nickel, both the reliability of use and the cycling performance of the battery cell 7 can be improved.

In some embodiments, under the condition that the ratio of the molar concentration of the sulfonylimide to the molar concentration of the hexafluorophosphate is 0.2 to 2, the mass percentage of element nickel is 80 wt% to 95 wt%. When the electrolytic salt is matched with the mass percentage of element nickel, both the reliability of use and the cycling performance of the battery cell 7 can be improved.

In some embodiments, under the condition that the ratio of the molar concentration of the sulfonylimide to the molar concentration of the hexafluorophosphate is 0.3 to 1.5, the layered transition metal oxide includes at least one of a compound with a chemical formula LiₐNi_{b}Co_{c}M_{d}OₑA_{f} and modified compounds thereof, where 0.3 ≤ b < 1, optionally 0.5 ≤ b < 1, and optionally 0.75 ≤ b ≤ 0.98. The relatively high mass percentage of element nickel makes the interface properties between layered transition metal oxides and the electrolyte more active. When the ratio of the molar concentration of the sulfonylimide to the molar concentration of the hexafluorophosphate falls within the foregoing range, the sulfonylimide can improve the interface stability between the layered transition metal oxides and the electrolyte, reducing the risk of side reactions and improving the cycling performance of the battery cell 7.

For example, b may be 0.3, 0.4, 0.5, 0.55, 0.6, 0.65, 0.7, 0.75, 0.8, 0.85, 0.88, 0.9, 0.91, 0.92, 0.93, 0.94, 0.95, 0.96, 0.97, or 0.98, or a range defined by any two of the foregoing values.

In some embodiments, the sulfonylimide includes an anion represented by formula A, 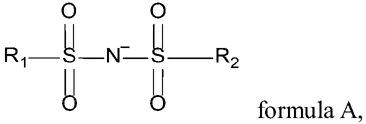 where
in formula A, R₁ and R₂ each independently include a halogen atom or a C1 to C6 haloalkyl group.

The sulfonylimide with the foregoing materials has excellent thermal stability, which is conducive to reducing the corrosion of the electrolytic salt on the shell 20, enhancing the reliability of use and cycling performance of the battery cell 7.

In some embodiments, the halogen atom includes a fluorine atom.

In some embodiments, the C1 to C6 haloalkyl group includes a C1 to C6 fluoroalkyl group.

In some embodiments, R₁ and R₂ each independently include a fluorine atom or a C1 to C3 fluoroalkyl group. The foregoing materials are easy to dissociate active ions, and the viscosity of the electrolytic salt is relatively low, which is conducive to enhancing the liquid phase transport capacity of the electrolyte and improving the kinetic performance of the electrolyte.

For example, the anion represented by formula A includes one or more of the anions represented by formula A-1 to formula A-5,

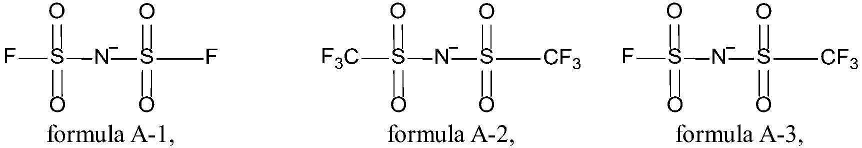

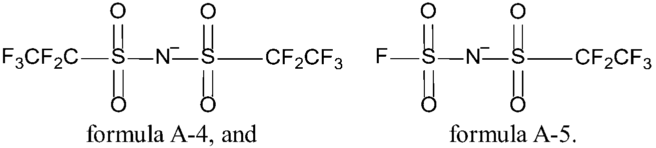

Optionally, the anion represented by formula A includes one or more of anions represented by formula A-1 and formula A-2,

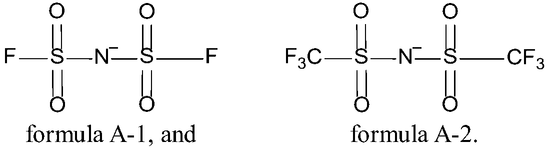

In some embodiments, the organic solvent may also include but is not limited to at least one of cyclic carbonates, butylene carbonate (BC), fluoroethylene carbonate (FEC), gamma-butyrolactone (GBL), sulfolane (SF), methyl sulfonyl methane (MSM), ethylmethyl sulfone (EMS), or diethyl sulfone (ESE). Optionally, the organic solvent further includes cyclic carbonates. For example, the cyclic carbonates include at least one of ethylene carbonate (EC), propylene carbonate (PC), or fluoroethylene carbonate (FEC).

In this application, the qualitative and quantitative measurement of substances or elements in the electrolyte can be carried out using suitable devices and methods known to those skilled in the art. Relevant measurement methods can refer to domestic and international measurement standards, corporate standards, or the like, and those skilled in the art can also adaptively change some measurement steps/instrument parameters or the like from the perspective of measurement accuracy to obtain more accurate measurement results. A single measurement method can be used for qualitative or quantitative measurement, or several measurement methods can be used in combination for qualitative or quantitative measurement.

In the embodiments of this application, types and percentages of inorganic components/lithium salt concentrations in the electrolyte have meanings well known in the art, and can be measured using a device and method well known in the art. For example, standard JY/T020-1996 "General rules for ion chromatography" can be referred to for qualitative or quantitative analysis of inorganic components/lithium salt concentration in the electrolyte using an ion chromatography analysis method. In the embodiments of this application, a newly prepared electrolyte can be used as a sample, or a free electrolyte obtained from a reverse disassembled battery that has been completely discharged (discharged to the lower cutoff voltage, with the state of charge of the battery being about 0 wt% SOC) can be used as a sample, for measurement using the ion chromatography analysis method.

In the embodiments of this application, types and percentages of organic components in the electrolyte have meanings well known in the art, and can be measured using a device and method well known in the art. For example, GB/T9722-2006 "Chemical reagent - General rules for the gas chromatography" can be referred to for qualitative and quantitative analysis of organic components in the electrolyte using a gas chromatography method. In the embodiments of this application, a newly prepared electrolyte can be used as a sample, or a free electrolyte obtained from a reverse disassembled battery that has been completely discharged (discharged to the lower cutoff voltage, with the state of charge of the battery being about 0 wt% SOC) can be used as a sample, for measurement using the ion chromatography analysis method.

In the embodiments of this application, the thickness of the side wall 212 has a meaning well known in the art, and can be measured using a device and method well known in the art, for example, using a spiral micrometer or a vernier caliper.

In the embodiments of this application, the thickness of the weak portion 222 has a meaning well known in the art, and can be measured using a device and method well known in the art, for example, using a micrometer to measure the thickness.

In the embodiments of this application, the thickness of the film layer has a meaning well known in the art, and can be measured using a device and method well known in the art. For example, the shell 20 can be cut, and the thickness of the film layer at different positions can be measured using an X-ray measuring instrument, with the average value used as the thickness of the film layer.

In the embodiments of this application, types and percentages of elements in the film layer have meanings well known in the art, and can be measured using a device and method well known in the art. For example, an energy dispersive spectrometer and a scanning electron microscope can be used to measure the types and percentages of elements in the film layer surface. The types and percentages of elements in the film layer surface are generally the same as those in the film layer, and the types and percentages of elements in the film layer are characterized by measuring the types and percentages of elements in the film layer surface.

### Example

Content disclosed in the embodiments of this application is described in detail in the following examples. These examples are merely for illustrative purposes because various modifications and changes made without departing from the scope of the content disclosed in the embodiments of this application are apparent to persons skilled in the art. Unless otherwise stated, all parts, percentages, and ratios reported in the following examples are based on mass, all reagents used in the examples are commercially available or synthesized in a conventional manner, and can be used directly without further treatment, and all instruments used in the examples are commercially available.

### Example 1

### 1. Preparation of positive electrode plate

The positive electrode plate included a positive electrode current collector and a positive electrode film layer. The positive electrode film layer was located on two sides of the positive electrode current collector. The positive electrode current collector was an aluminum foil. The positive electrode film layer was a film layer formed by evenly applying a positive electrode slurry (with a solvent being N-methylpyrrolidone NMP) onto a surface of the positive electrode current collector aluminum foil, followed by drying and cold pressing. The positive electrode film layer included a positive electrode active material, conductive agent acetylene black, and binder polyvinylidene fluoride (PVDF) at a weight ratio of 96.5:2:1.5.

The positive electrode active material included a compound with a molecular formula LiNi_{0.9}Co_{0.05}Mn_{0.05}O₂ (Ni90).

### 2. Preparation of negative electrode plate

The negative electrode plate included a negative electrode current collector and a negative electrode film layer. The negative electrode film layer was located on two sides of the negative electrode current collector. The negative electrode current collector was a copper foil. The negative electrode film layer was a film layer formed by evenly applying a negative electrode slurry (with a solvent being deionized water) on a surface of the negative electrode current collector copper foil, followed by drying and cold pressing. The negative electrode film layer included a negative electrode active material, binder styrene-butadiene rubber (SBR), thickener sodium carboxymethyl cellulose (CMC-Na), and conductive agent acetylene black at a weight ratio of 96.2:1.8:1.2:0.8.

The negative electrode active material included artificial graphite and silicon-based materials (specifically silicon-carbon compounds), with a percentage of element silicon in the negative electrode film layer being 5wt%.

### 3. Separation film

The separation film was a polypropylene PP film layer.

### 4. Preparation of electrolyte

The electrolyte included an organic solvent and a lithium salt. The organic solvent included a linear ester solvent and a cyclic ester solvent (ethylene carbonate). The linear ester solvent included a linear carbonate (dimethyl carbonate DMC) and linear carboxylates (methyl acetate and ethyl acetate with a mass ratio of 1:1). A mass ratio of the linear carbonate, linear carboxylates, and ethylene carbonate was 3:4:3. The lithium salt included lithium hexafluorophosphate LiPF₆ and lithium bis(fluorosulfonyl)imide LiFSI. After dimethyl carbonate DMC, methyl acetate, ethyl acetate, and ethylene carbonate were mixed according to the foregoing mass ratio, the lithium salt thoroughly dried was dissolved in the mixed organic solvent to prepare an electrolyte. The molar concentration of lithium hexafluorophosphate LiPF₆ was 0.6 mol/L, and the molar concentration of lithium bis(fluorosulfonyl)imide LiFSI was 0.4 mol/L.

### 5. Preparation of battery cell

The positive electrode plate, separation film, and negative electrode plate were stacked in sequence so that the separation film is between the positive electrode plate and the negative electrode plate for separation. The positive electrode plate, separation film, and negative electrode plate were wound to form an electrode assembly. The electrode assembly was placed into a shell of cylindrical structure that was dried and filled with an electrolyte, followed by processes such as vacuum packaging, standing, formation, and shaping, to obtain a battery cell. The shell includes a housing and an end cover, where the housing includes a side wall and an end wall that are integrally formed, the side wall surrounds the electrode assembly, and the end cover and the end wall are opposite to each other along the axial direction of the shell. The side wall is made of a steel material (stainless steel), and a thickness of the side wall is 0.4 mm. The end cover includes a weak portion, and a thickness of the weak portion is 0.1 mm.

### Comparative example 1

The battery cell was prepared using a method similar to that in Example 1, and a difference from Example 1 was that the mass percentages of constituents in the organic solvent has been adjusted, and that the molar concentration of lithium salt remains basically unchanged.

### Example 2-1 to Example 2-10

The battery cells were prepared using a method similar to that in Example 1, and a difference from Example 1 was that the mass percentages of substances in the organic solvent have been adjusted and that the molar concentration of the lithium salt remains basically unchanged.

### Example 3-1 to Example 3-6

The battery cells were prepared using a method similar to that in Example 1, and a difference from Example 1 was that the substance compositions of the organic solvent have been adjusted.

### Performance test

### 1. Test for cycling performance of battery cells

At 45°C, battery cells prepared in examples and the comparative example were charged at a constant current rate of 0.5 C to a charge cutoff voltage of 4.25 V, then charged at constant voltage until the current was less than or equal to 0.05 C, left standing for 5 minutes, then discharged at a constant current rate of 0.33 C to a discharge cutoff voltage of 2.5 V and left standing for 5 minutes, which was one charge discharge cycle. The battery cells were subjected to the charge and discharge cycling as described above, and the capacity retention rate of the battery cells after 800 cycles was calculated.

### 2. Test for gas production of batteries during storage

At 25°C, battery cells prepared in examples and the comparative example were charged at a constant current rate of 0.5 C to 4.25 V, then charged at constant voltage until the current is ≤ 0.05 C, then the batteries were stored at 60°C for 100 days. An external pressure gauge was used to measure the internal battery pressure (Mpa).

### 3. Test for internal resistance of battery cells

At 25°C, battery cells prepared in examples and the comparative example were charged at a constant current rate of 1C to 4.25 V, then charged at constant voltage until the current is less than or equal to 0.05 C, and then discharged at 1C for 30 minutes to adjust the capacity of the battery cells to 50 wt% state of charge SOC.

Positive and negative test leads of a TH2523AAC internal resistance tester were made into contact with positive and negative electrodes of a battery cell respectively, and an internal resistance value (mΩ) of the battery cell was read through the internal resistance tester.

### Test results

Test results are shown in Table 1.

**Table 1**

| Item | Electrolyte | | | | | Battery performance | | |
|---|---|---|---|---|---|---|---|---|
| | Linear ester solvent | | | | | Capacity retention rate (%) | Internal resistance (mΩ) | Internal pressure (Mpa) |
| | Linear carbonate | | Linear carboxylate | | Mass percentage (wt%) | | | |
| | Material | Mass percentage (wt%) | Material | Mass percentage (wt%) | | | | |
| Comparative example 1 | | 21.25 | / | / | 21.25 | 60.0 | 25.0 | 0.26 |
| Example 1 | | 25.50 | | 34.00 | 59.50 | 80.0 | 5.0 | 0.25 |
| Example 2-1 | | 4.25 | | 21.25 | 25.50 | 83.0 | 9.5 | 0.241 |
| Example 2-2 | | 8.50 | | 34.00 | 42.50 | 82.0 | 8.6 | 0.246 |
| Example 2-3 | | 17.00 | | 34.00 | 51.00 | 81.0 | 6.0 | 0.252 |
| Example 2-4 | formula I-1 | 34.00 | formula II-3 and formula II-2 with a mass ratio of 1:1 | 34.00 | 68.00 | 78.0 | 5.2 | 0.263 |
| Example 2-5 | | 42.50 | | 34.00 | 76.50 | 76.0 | 4.7 | 0.276 |
| Example 2-6 | | 17.00 | | 8.50 | 25.50 | 83.5 | 9.8 | 0.24 |
| Example 2-7 | | 17.00 | | 25.50 | 42.50 | 82.5 | 8.9 | 0.243 |
| Example 2-8 | | 17.00 | | 34.00 | 51.00 | 80.6 | 5.8 | 0.251 |
| Example 2-9 | | 17.00 | | 51.00 | 68.00 | 77.5 | 5.1 | 0.265 |
| Example 2-10 | | 17.00 | | 59.50 | 76.50 | 75.5 | 4.5 | 0.278 |
| Example 3-1 | formula I-2 | 25.50 | | 34.00 | 59.50 | 80.2 | 5.3 | 0.248 |
| Example 3-2 | formula I-4 | 25.50 | | 34.00 | 59.50 | 79.8 | 5.5 | 0.247 |
| Example 3-3 | formula I-1 | 25.50 | formula II-2 | 34.00 | 59.50 | 80.1 | 6.1 | 0.247 |
| Example 3-4 | formula I-2 | 25.50 | formula II-3 | 34.00 | 59.50 | 79.7 | 4.8 | 0.255 |
| Example 3-5 | formula I-3 | 25.50 | formula II-4 | 34.00 | 59.50 | 80.3 | 6.3 | 0.246 |
| Example 3-6 | formula I-1 | 68.00 | / | / | 68.00 | 80.5 | 7.3 | 0.244 |

In Table 1,
formula I-1 represents dimethyl carbonate DMC; formula I-2 represents ethyl methyl carbonate; and formula I-4 represents perfluorodimethyl carbonate; and
formula II-2 represents ethyl acetate; formula II-3 represents methyl acetate; and formula II-4 represents ethyl propionate.

It can be learned from Table 1 that
in Comparative example 1, the composition of the organic solvent results in poorer ionic conductivity of the electrolyte, leading to higher internal resistance of the battery cell, poorer rate performance, and the like. As compared to Comparative example 1, in the examples of this application, the use of high percentage of the linear ester solvent is conducive to enhancing ionic conductivity and improving the liquid phase transport capacity of active ions, so that the fast charging and discharging capability of the battery cell is enhance, the rate performance of the battery cell is improved, the reliability of use of the battery cell can be improved, and cycling performance can be further enhanced.

In Example 2-1 to Example 2-10, with the adjustment of the percentage and composition of the linear ester solvent, the rate performance of the battery cell can be further improved, and the reliability of use and cycling performance of the battery cell can be improved. In Example 3-1 to Example 3-6, with the adjustment of the composition of the linear ester solvent, the rate performance of the battery cell can be further enhanced, and the reliability of use and cycling performance of the battery cell can be improved.

### Example 4

The battery cell was prepared using a method similar to that in Example 1, and a difference from Example 1 was that the thickness of the side wall of the shell has been adjusted.

### Example 5

The battery cell was prepared using a method similar to that in Example 1, and a difference from Example 1 was that the thickness of the weak portion has been adjusted.

### Example 6

The battery cell was prepared using a method similar to that in Example 1, and a difference from Example 1 was that the material of the side wall and weak portion of the shell has been adjusted.

Test results are shown in Table 2.

**Table 2**

| Item | Shell | | Pressure relief mechanism | | Battery performance | | |
|---|---|---|---|---|---|---|---|
| | Side wall | | Weak portion | | Capacity retention rate (%) | Internal resistance (mΩ) | Internal pressure (Mpa) |
| | Material | Thickness (mm) | Material | Thickness (mm) | | | |
| Example 4 | Steel | 0.50 | Steel | 0.10 | 79.7 | 5.4 | 0.251 |
| Example 5 | Steel | 0.40 | Steel | 0.05 | 80.2 | 5.2 | 0.254 |
| Example 6 | Aluminum | 0.40 | Aluminum | 0.10 | 80.2 | 5.3 | 0.253 |

It can be learned from Table 2, the electrolyte system in the examples of this application is suitable for shells with different thicknesses. For example, the thickness of the side wall is 0.30 mm to 1.2 mm, optionally 0.30 mm to 0.55 mm. With the thickness of the side wall falling within the foregoing range, the battery has excellent cycling performance and reliability of use.

The electrolyte system in the examples of this application is suitable for the weak portions with different thicknesses, such as 0.01 mm to 0.3 mm, optionally 0.05 mm to 0.2 mm. With the thickness of the weak portion falling within the foregoing range, the battery has excellent cycling performance and reliability of use.

The electrolyte system in the examples of this application is suitable for the shell and the weak portion that are made of different materials, such as a steel material and an aluminum material. With the use of the shell and the weak portion that are made of different materials, the battery has excellent cycling performance and reliability of use.

Although illustrative implementations have been demonstrated and described, those skilled in the art should understand that the foregoing implementations are not to be construed as limiting this application, and that the implementations may be changed, replaced, and modified without departing from the spirit, principle, and scope of this application.

## Claims

1. A battery cell, comprising a shell, an electrode assembly, and an electrolyte, wherein the electrode assembly and the electrolyte are accommodated in the shell;
the shell is a cylindrical structure; and
the electrolyte comprises a linear ester solvent, and a mass percentage of the linear ester solvent in the electrolyte is greater than or equal to 25.5 wt%.

2. The battery cell according to claim 1, wherein the mass percentage of the linear ester solvent in the electrolyte is 25.5 wt% to 76.5 wt%.

3. The battery cell according to claim 2, wherein the mass percentage of the linear ester solvent in the electrolyte is 25.5 wt% to 70 wt%.

4. The battery cell according to claim 3, wherein the mass percentage of the linear ester solvent in the electrolyte is 42.5 wt% to 70 wt%.

5. The battery cell according to any one of claims 1 to 4, wherein the linear ester solvent comprises a linear carbonate, and a mass percentage of the linear carbonate in the electrolyte is 4 wt% to 70 wt%.

6. The battery cell according to claim 5, wherein the mass percentage of the linear carbonate in the electrolyte is 4 wt% to 42.5 wt%.

7. The battery cell according to any one of claims 1 to 6, wherein the linear carbonate comprises a compound represented by formula I, 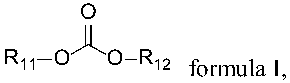 wherein
in formula I, R₁₁ and R₁₂ each independently comprise a C1 to C3 alkyl group or a C1 to C3 haloalkyl group.

8. The battery cell according to claim 7, wherein R₁₁ and R₁₂ each independently comprise a C1 to C3 alkyl group or a C1 to C3 fluoroalkyl group.

9. The battery cell according to claim 7 or 8, wherein the linear carbonate comprises one or more of compounds represented by formula I-1 to formula I-6,

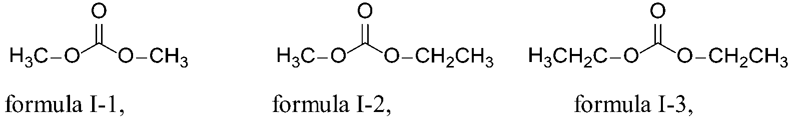

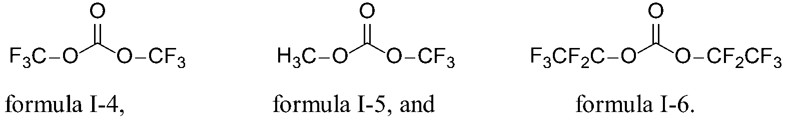

10. The battery cell according to any one of claims 5 to 9, wherein the linear carbonate comprises a compound represented by formula I-1,

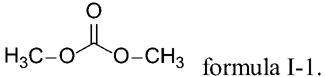

11. The battery cell according to any one of claims 1 to 10, wherein the linear ester solvent further comprises a linear carboxylate, and a mass percentage of the linear carboxylate in the electrolyte is 4 wt% to 70 wt%.

12. The battery cell according to claim 11, wherein the mass percentage of the linear carboxylate in the electrolyte is 8.5 wt% to 60 wt%.

13. The battery cell according to claim 11 or 12, wherein the linear carboxylate comprises a compound represented by formula II, 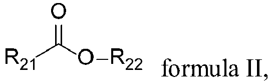 wherein
in formula II,
R₂₁ comprises a hydrogen atom, a halogen atom, a C1 to C3 alkyl group, or a C1 to C3 haloalkyl group; and
R₂₂ comprises a C1 to C3 alkyl group or a C1 to C3 haloalkyl group.

14. The battery cell according to claim 13, wherein
R₂₁ comprises a hydrogen atom, a fluorine atom, a C1 to C3 alkyl group, or a C1 to C3 fluoroalkyl group; and/or
R₂₂ comprises a C1 to C3 alkyl group or a C1 to C3 fluoroalkyl group.

15. The battery cell according to claim 13 or 14, wherein the linear carboxylate comprises one or more of compounds represented by formula II-1 to formula II-6,

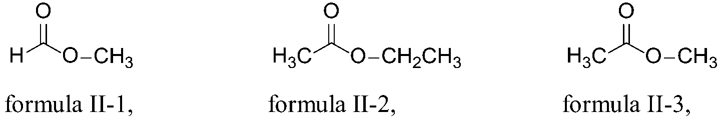

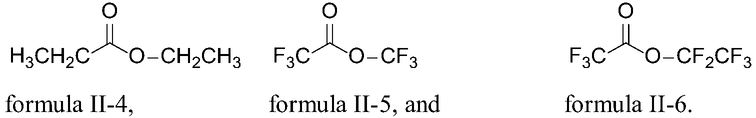

16. The battery cell according to claim 15, wherein
the linear carboxylate comprises one or more of compounds represented by formula II-2 and formula II-3,

17. The battery cell according to claim 16, wherein the linear carbonate comprises a compound represented by formula I-1, 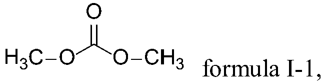 wherein
a mass percentage of the compound represented by formula I-1 in the electrolyte is 8.5 wt% to 35 wt%; and
the linear carboxylate comprises a compound represented by formula II-2 and a compound represented by formula II-3, and a mass percentage of the compound represented by formula II-2 and the compound represented by formula II-3 in the electrolyte is 20 wt% to 55 wt%.

18. The battery cell according to any one of claims 1 to 17, wherein the shell comprises a housing and an end cover, the housing comprises a side wall and an end wall connected to the side wall, the housing has an opening, the end cover is connected to the side wall and covers the opening, and the end cover and the end wall are opposite to each other along axial direction of the shell.

19. The battery cell according to claim 18, wherein a matrix material of the side wall is steel, and a thickness of the side wall is 0.30 mm to 1.2 mm.

20. The battery cell according to claim 19, wherein the thickness of the side wall is 0.30 mm to 0.55 mm.

21. The battery cell according to any one of claims 18 to 20, wherein the side wall and the end wall are integrally formed.

22. The battery cell according to any one of claims 18 to 21, wherein the end cover is provided with a pressure relief mechanism.

23. The battery cell according to claim 22, wherein the pressure relief mechanism comprises a weak portion, a matrix material of the weak portion comprises steel, and a thickness of the weak portion is 0.01 mm to 0.3 mm.

24. The battery cell according to claim 23, wherein the thickness of the weak portion is 0.05 mm to 0.2 mm.

25. The battery cell according to any one of claims 23 to 24, wherein the end cover is provided with a recess, and a bottom wall of the recess is the weak portion.

26. The battery cell according to any one of claims 18 to 25, wherein the battery cell further comprises an electrode terminal disposed on the end wall; and
the battery cell comprises an electrode assembly accommodated in the housing, the electrode assembly comprises a first tab and a second tab that have opposite polarities, the first tab is electrically connected to the end wall, and the second tab is electrically connected to the electrode terminal.

27. The battery cell according to any one of claims 1 to 26, wherein a dimension of the shell along its axial direction is 1.3 times to 2.5 times a dimension of the shell along its radial direction.

28. The battery cell according to any one of claims 1 to 27, wherein the dimension of shell along its axial direction is 50 mm to 150 mm; and/or
the dimension of the shell along its radial direction is 40 mm to 80 mm.

29. The battery cell according to any one of claims 1 to 28, wherein the electrolyte comprises an electrolytic salt, the electrolytic salt comprises a hexafluorophosphate and a sulfonylimide, and a molar concentration of the hexafluorophosphate is less than or equal to 0.9 mol/L.

30. The battery cell according to claim 29, wherein the molar concentration of the hexafluorophosphate is 0.2 mol/L to 0.8 mol/L.

31. The battery cell according to claim 29 or 30, wherein a ratio of a molar concentration of the sulfonylimide to the molar concentration of the hexafluorophosphate is 0.06 to 6.

32. The battery cell according to any one of claims 29 to 31, wherein a molar concentration of the electrolytic salt is 0.5 mol/L to 2 mol/L.

33. The battery cell according to any one of claims 29 to 32, wherein the sulfonylimide comprises an anion represented by formula A, 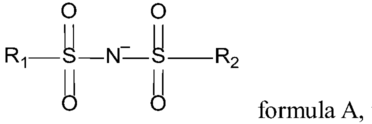 wherein
in formula A, R₁ and R₂ each independently comprise a halogen atom or a C1 to C6 haloalkyl group.

34. The battery cell according to claim 33, wherein the halogen atom comprises a fluorine atom; and/or
the C1 to C6 haloalkyl group comprises a C1 to C6 fluoroalkyl group.

35. The battery cell according to claim 33 or 34, wherein R₁ and R₂ each independently comprise a fluorine atom or a C1 to C3 fluoroalkyl group.

36. The battery cell according to any one of claims 33 to 35, wherein the anion represented by formula A comprises one or more of anions represented by formula A-1 to formula A-5,

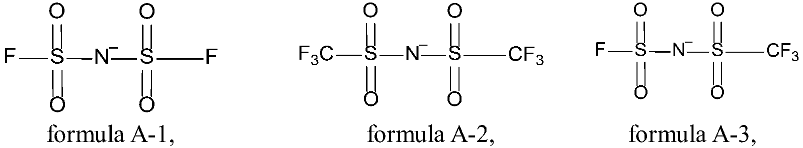

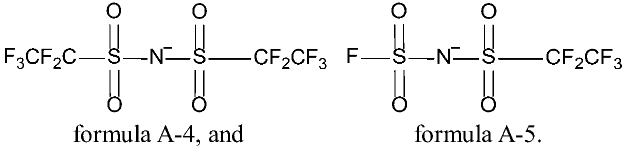

37. The battery cell according to claim 36, wherein the anion represented by formula A comprises one or more of the anions represented by formula A-1 and formula A-2,

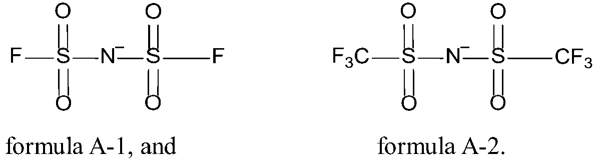

38. The battery cell according to any one of claims 1 to 37, wherein the shell comprises a shell body and a film layer, the film layer is disposed on at least a surface of the shell body facing the electrolyte, and a matrix element of the film layer is element nickel.

39. The battery cell according to claim 38, wherein a thickness of the film layer is 1.5 µm to 6.0 µm.

40. The battery cell according to claim 38 or 39, wherein a mass percentage of element nickel in the film layer is 70 wt% to 100 wt%.

41. The battery cell according to any one of claims 38 to 40, wherein the film layer further comprises element iron, and a mass percentage of element iron in the film layer is 0.1 wt% to 10 wt%; and/or
the film layer further comprises element carbon, and a mass percentage of element carbon in the film layer is 0.1 wt% to 15 wt%.

42. The battery cell according to any one of claims 38 to 41, wherein a matrix material of the shell body is steel.

43. A battery, comprising the battery cell according to any one of claims 1 to 42.

44. An electric apparatus, comprising the battery according to claim 43.
